(19) Europäisches Patentamt
European Patent Office
Office européen des brevets

(11) **EP 4 495 892 A1**

(12) **EUROPEAN PATENT APPLICATION**

(43) Date of publication:
**22.01.2025 Bulletin 2025/04**

(21) Application number: **23187111.2**

(22) Date of filing: **21.07.2023**

(51) International Patent Classification (IPC):
***G06V 10/75*** *(2022.01)*  ***G06V 10/77*** *(2022.01)*
***G06V 10/82*** *(2022.01)*  ***G06V 40/16*** *(2022.01)*

(52) Cooperative Patent Classification (CPC):
**G06V 10/7715; G06V 10/757; G06V 10/82;
G06V 40/169; G06V 40/172**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Max-Planck-Gesellschaft zur
Förderung der
Wissenschaften e.V.
80539 München (DE)**

(72) Inventors:
• **HUANG, Xingchang
66123 Saarbrücken (DE)**

• **SINGH, Gurprit
66123 Saarbrücken (DE)**
• **SEIDEL, Hans-Peter
66123 Saarbrücken (DE)**
• **MEMARI, Pooran
91128 Palaiseau (FR)**
• **RITSCHEL, Tobias
WC1E 6EA London (GB)**

(74) Representative: **Hofmann, Matthias
Boehmert & Boehmert
Anwaltspartnerschaft mbB
Pettenkoferstraße 22
80336 München (DE)**

(54) **METHOD FOR DETERMINING A MAPPING BETWEEN POINT PATTERNS AND CORRESPONDING COORDINATES IN A 2D LATENT SPACE**

(57)     The present invention provides a Computer-implemented method for determining a mapping between point patterns and corresponding coordinates in a 2D latent space, the method comprising:
- for each of a set of representative point patterns, determining a set of feature vectors, wherein features of the feature vectors represent perceptual properties,
- determining a dissimilarity matrix between the feature vectors of each of representative point patterns, and
- performing dimensionality reduction using the dissimilarity matrix to determine the mapping from the representative point patterns to the 2D latent space.

(a)          (b)          (c)          (d)

**FIG. 1**

**Description**

TECHNICAL FIELD

The present invention relates inter alia to a computer-implemented method for determining a mapping between point patterns and corresponding coordinates in a 2D latent space and a computer-implemented method for training a network to predict for a given point pattern a 3-channel image. The present invention also relates to a computer-readable storage medium storing program code, the program code comprising instructions for carrying out such methods.

BACKGROUND

Point patterns are characterized by their density and correlation. While spatial variation of density is well-understood, analysis and synthesis of spatially-varying correlation is an open challenge. No tools are available to intuitively edit such point patterns, primarily due to the lack of a compact representation for spatially varying correlation.

SUMMARY OF THE INVENTION

A first aspect of the invention provides a computer-implemented method for determining a mapping between point patterns and corresponding coordinates in a 2D latent space, the method comprising:

- for each of a set of representative point patterns, determining a set of feature vectors wherein features of the feature vectors represent perceptual properties,
- determining a dissimilarity matrix between the representative point patterns based on the feature vectors, and
- performing dimensionality reduction using the dissimilarity matrix to determine the mapping from the representative point patterns to the 2D latent space.

The method of the first aspect can determine a mapping that reflects perceptual properties, in particular in the sense that coordinates that are nearby in the 2D latent space correspond to point patterns that appear visually similar to a human observer.

The dissimilarity matrix does not need to be computed from the feature vectors. For example, gram matrices can be determined based on the feature vectors and the dissimilarity matrix can be determined based on the gram matrices.

Using the Gram matrices has the advantage that the method can compute the dissimilarity between the above Gram matrices, which tells how perceptually similar or dissimilar two point patterns are from each other. The advantage of using Gram matrices is that they capture the perceptual features that are not sensitive to the exact point locations of the input point pattern. In comparison, feature vectors can be very different when two similar-looking point patterns have different point locations.

In a first implementation of the method of the first aspect, the method further comprises an initial step of determining the representative point patterns based on representative radial power spectrum or pair correlation function profiles.

This has the advantage that a better sampling over the entire intended space of point patterns is possible. It is understood that not for every radial power spectrum or pair correlation function profile there must be a corresponding point pattern. Thus, a sampling method based on radial power spectra or pair correlation functions may comprise dismissing radial power spectra or pair correlation functions for which no corresponding point pattern can be determined.

In a further implementation of the method according to the first aspect, the set of feature vectors for each representative point pattern is determined using a pre-trained neural network, in particular using a pre-trained VGG network. The VGG network has proven particularly useful for efficiently determining features that reflect human perception.

Preferably the feature vectors with respect to each representative point pattern are used to compute corresponding Gram matrices. This can be done for feature vectors determined using VGG or other neural networks.

In a further implementation of the method according to the first aspect, performing dimensionality reduction comprises performing multidimensional scaling. This has been shown to be a particularly effective dimensionality reduction method in the context of the present method. However, it is understood that other dimensionality reduction methods such as t-SNE can also be employed.

In a further implementation of the method according to the first aspect, the method further comprises storing, for each 2D latent coordinate,

- a pair correlation function, PCF, of the point pattern corresponding to the 2D latent coordinate, and/or
- a learning rate to obtain the point pattern corresponding to the 2D latent coordinate. Storing the pair correlation function of the point pattern instead of the point pattern itself has the advantage that memory space can be saved.

Storing the learning rate for obtaining a point pattern has the advantage that each correlation gets a tailored learning rate. This is very useful when obtaining point patterns with spatially varying correlations. For example, a human face represented by different correlations (hair, face) will obtain better quality (local minima) correlations for each region when using pattern-specific learning rates.

In a further implementation of the method according to the first aspect, the method further comprises interpolating and/or extrapolating the stored PCFs to obtain PCFs at all spatial coordinates in the 2D latent space, wherein preferably the interpolation and/or extrapolating comprises using Inverse Distance Weighting.

It is also possible to train a simple neural network that takes as input stored PCFs, and outputs a PCF at each new location in the 2D latent space. One could also obtain a PCF at a new location in the 2D latent space by optimizing for a linear combination of stored PCFs.

A second aspect of the present invention provides a Computer-implemented method for training a network to predict for a given point pattern a 3-channel image, wherein a first channel of the 3-channel image corresponds to a density of the given point pattern and a second and a third channel of the 3-channel image correspond to a correlation of the given point pattern, the method comprising:

- obtaining a dataset of 1-channel training images as density,
- creating, for each of the 1-channel training images, a set of training point patterns, wherein each of the set of training point patterns has a randomly determined 2-channel spatially varying correlation, and
- using the sets of training point patterns to train the network to predict correlation and density.

The method of the second aspect has the advantage that an efficient training can be provided for a network that predict for a given point pattern a 3-channel image, wherein the density and correlation are encoded in the three channels.

In a first implementation of the method of the second aspect, creating a set of training point patterns comprises determining each of the training point patterns by:

- randomly creating locations of 2D Gaussian functions, each corresponding to a 2D-co-ordinate in a 2D latent space,
- blending the 2D Gaussian functions to create a color map, and
- creating a training point pattern with a correlation corresponding to the color map and a density corresponding to the 1-channel image.

This has the advantage that it creates a large dataset of 3-channel images with spatially-varying density and correlations for training the network.

In a further implementation of the method of the second aspect as such or according to the first implementation of the second aspect, the training images are human face images, and the creating a set of training point patterns comprises determining each of the training point patterns by:

- obtaining a segmentation map of the face image,
- assigning random correlations to each of the segments of the segmentation of the face image, and
- creating a training point pattern with correlations corresponding to the random correlations and density corresponding to the 1-channel image.

Experiments have shown that this method is particularly suitable for human face images. Furthermore, segmentation methods for human face images are readily available.

In a further implementation of the method of the second aspect as such or according to the first implementation of the second aspect, the method further comprises training a set of neural networks, wherein each neural network is trained for a different image class.

Experiments have shown that having networks trained for specific image classes gives superior results compared to using a universally trained network.

A third aspect of the present invention provides a Computer-implemented method for determining a 3-channel image from a given point pattern, the method comprising using a neural network, which has been trained using a method according to the first aspect or one of its implementations.

In a first implementation of the method of the third aspect as such or according to the first implementation of the third aspect, the network comprises a pix2pix-network.

A fourth aspect of the present invention provides a Computer-implemented method for determining, for a given 2D coordinate in the latent space, a corresponding point pattern, the method comprising looking up a prestored PCF that corresponds to the 2D coordinate.

A fifth aspect of the present invention provides Computer-implemented method for determining a point pattern based on a 3-channel image, the method comprising:

- for each pixel of the 3-channel image, obtaining a target PCF that reflects density as indicated by a first channel of the 3-channel image and correlation as indicated by a second and a third channel of the 3-channel image,

    - randomly initializing a point pattern,
    - iteratively:

        - determining random locations in the point pattern,
        - at each of the random locations:

            - calculating an actual PCF of nearest k points of the point pattern to the random location, and
            - moving the nearest k points of the point pattern so that the actual PCF matches the target PCF at that random location.

A sixth aspect of the invention provides a method for editing a point pattern, wherein the method comprises:

- determining, using a method of claim, a color image based on the point pattern,
- using a method for editing color images to obtain an edited color image representing edited point pattern, and
- determining, preferably using a method of one of claims, an edited point pattern based on the edited color image.

A further aspect of the invention refers to a computer-readable storage medium storing program code, the program code comprising instructions that when executed by a processor carry out the method of one of the above-mentioned aspects or implementations.
A further aspect of the invention refers to a computing device configured to carry out the method of one of the above-mentioned aspects or implementations.

**BRIEF DESCRIPTION OF THE DRAWINGS**

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

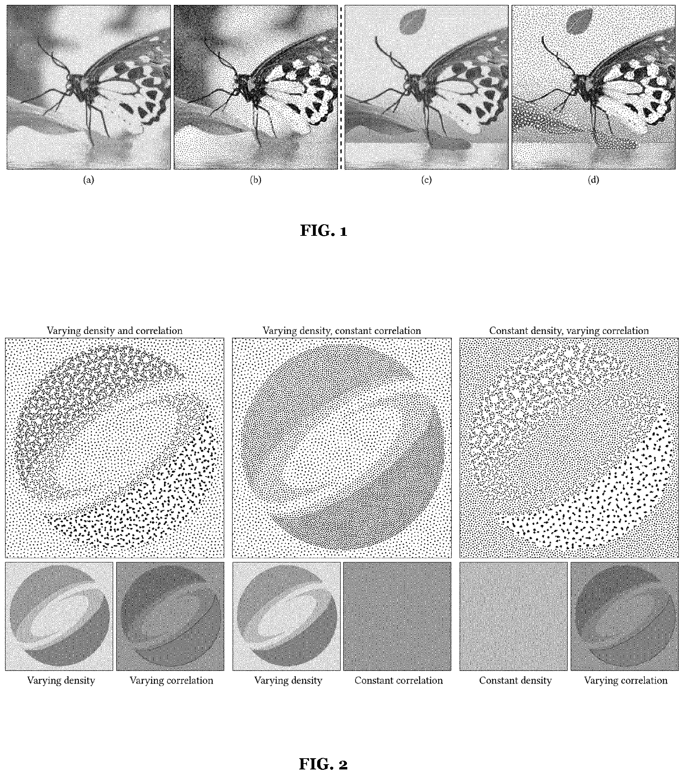

Fig. 1 illustrates how the presented framework can facilitate point pattern design by representing both density and correlation as a three-channel raster image (a). These images can be edited (c) in terms of their density or correlation using off-the-shelf image manipulation software. The resulting point patterns are shown before (b) and after the edits (d).

Fig. 2 illustrates manipulating density and correlations independently. Top row shows the point set synthesized using the density (left) and the correlation map (right) shown in the bottom row. The first column shows a point set when both density and correlation are spatially varying. Second column has constant correlation but spatially varying density. The third column point set reproduces the Siggraph logo just from spatially varying correlations.

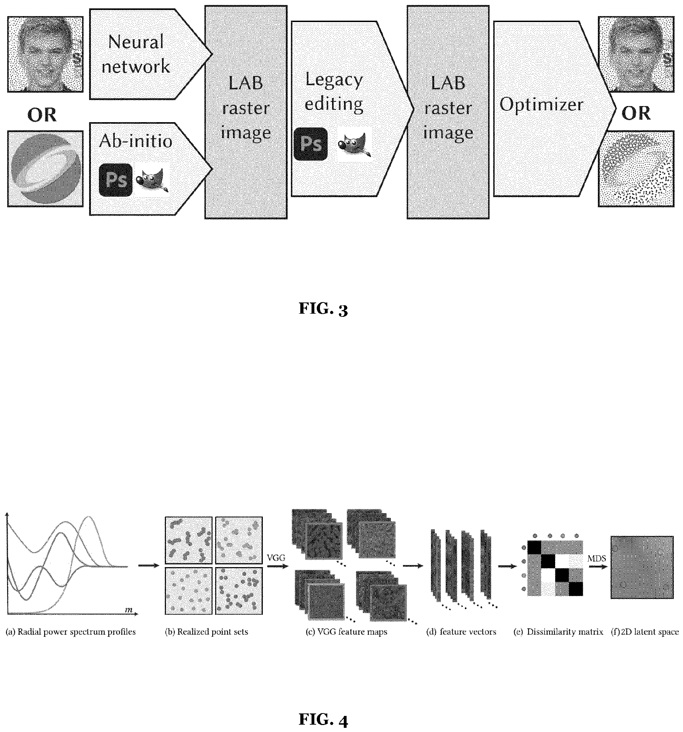

Fig. 3 gives an overview of the workflow of the presented method.

Fig. 4 illustrates the embedding from m-dimensional space to a 2D space. (a) Random power spectra are generated and their corresponding realizable point patterns in (b) are synthesized using gradient descent. The point patterns are then rasterized and pass through a pre-trained VGG network to generate (c) feature maps, which are flattened into feature vectors (d). A dissimilarity matrix (e) computed from these VGG feature vectors are used to bring m-dimensional representation to a 2D space (f) using MDS.

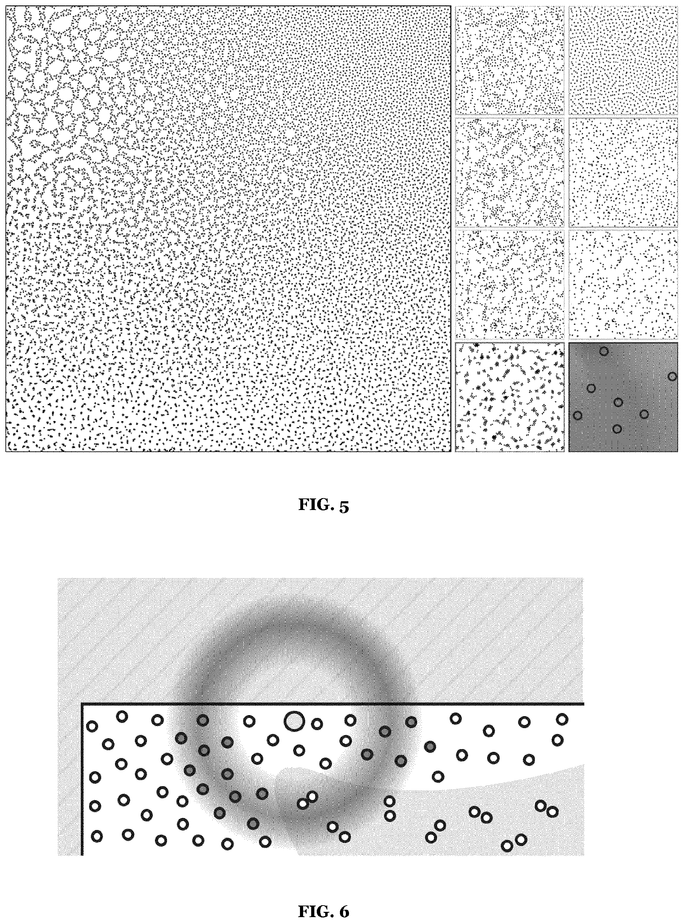

Fig. 5 shows in the left image the resynthesized point pattern with a continuously varying correlation in the 2D latent space $f(z)$. The bottom-right (black) square shows different coordinates and their color in *CIELAB*. Point patterns with the corresponding spatially-invariant correlations for each of these coordinates are shown with respective color coding in the right halve. Blue noise can be spotted on the top-right side of the space.

Fig. 6 illustrates a density estimation kernel.

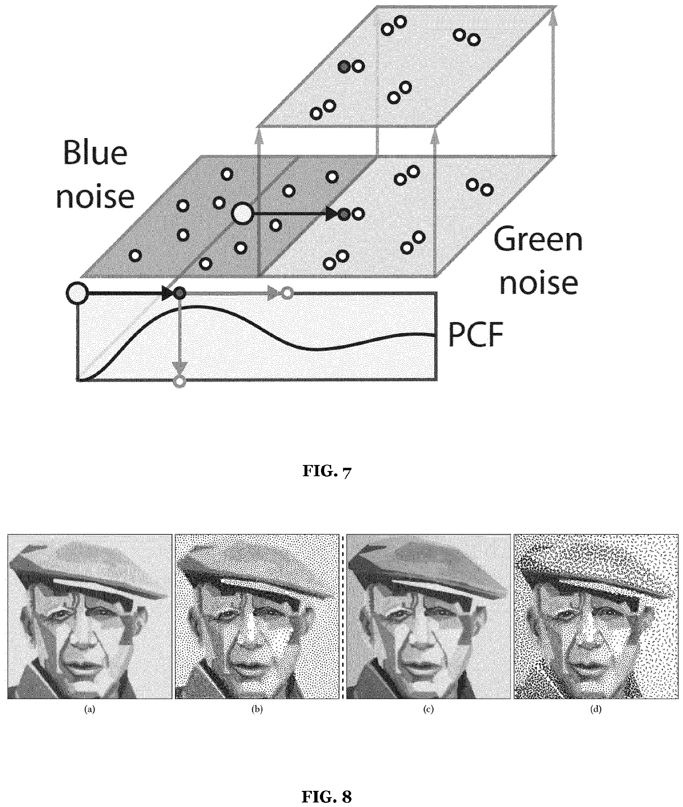

Fig. 7 illustrates an area of blue and an area of green noise.

Fig. 8 illustrates starting with a given density and correlation map (a), and performing edits directly on this three-channel raster image (c) to obtain the point pattern in (d) after resynthe-sis. In (c), the density map (L-channel) is edited with gradients from left to right and edit correlations in the AB-channel to enhance different segments of the image. No neural network is used here.

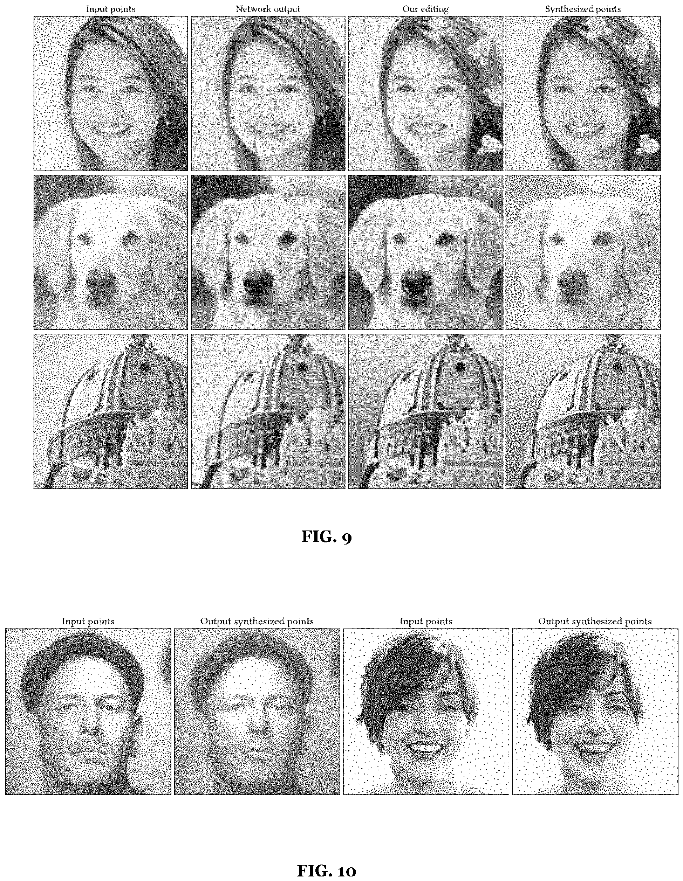

Fig. 9 illustrates input points (first column) generated by our synthesis and mapped to raster images (second column). An edit is performed in Adobe Photoshop (third column), and the new point pattern is resynthesized (fourth column). In the first row, the background is edited with correlation using the AB channels and some flowers are added on the hair using the L channel. The second row shows another edit where the correlation is changed in the background using the AB channels. In the third row the correlation is changed in the background (AB channels) and a density gradient (L channel) is added. To generate the results in the second column from the first column, neural networks trained on our human faces, animal faces and churches datasets are used, respectively.

Fig. 10 shows how the neural network maps the input point pattern to a density and correlation map. To obtain different point pattern editing effects, different advanced filters are applied to the output density map. From left, the second column shows the relighting effect using the method by ClipDrop Relighting API. Fourth column shows the change in the facial expression and the eyes direction performed using a neural filter from Adobe Photoshop.

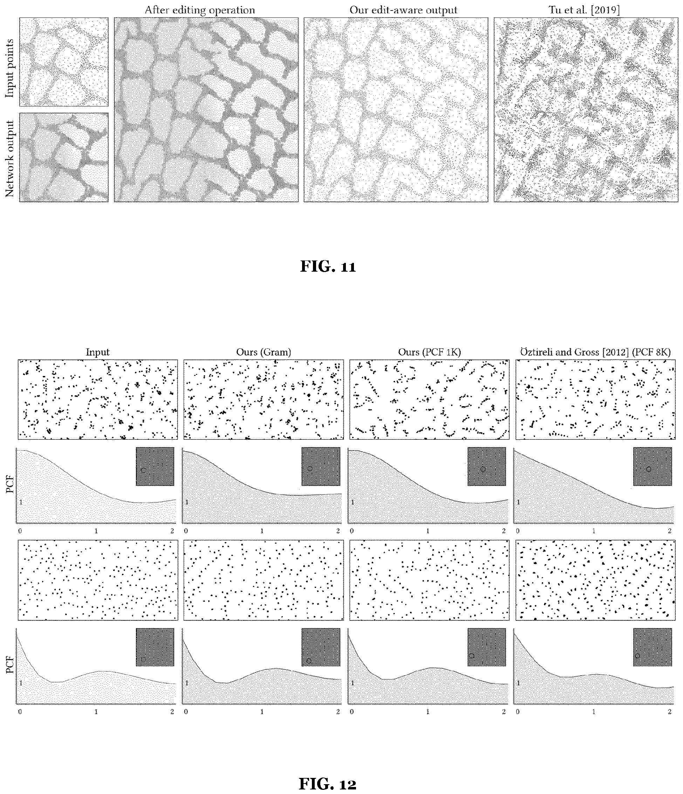

Fig. 11 illustrates starting from an input pattern of tree cover density (left, top), a network specialized on geomatic data is used to estimate correlation and density (left, bottom). One can then apply existing image operations, such as Adobe Photoshop's "Content-Aware Fill" (second column) to achieve "Point Pattern Expansion" (third column), which compares favorably to direct optimization of points to match the inputs' VGG-based Gram matrices, deep correlation matrices and histograms.

Fig. 12 illustrates how for an input point pattern, its nearest neighbor is queried in the latent space. Using Gram matrices (middle-left) the nearest neighbor quality is closer to the input than using PCFs (middle-right). The inset images alongside PCFs show the latent space coordinates. The correlation space from Öztireli and Gross [2012] uses 8K PCFs but is still not diverse enough to provide good nearest neighbor for the input. Our latent space has only 1000 base point patterns.

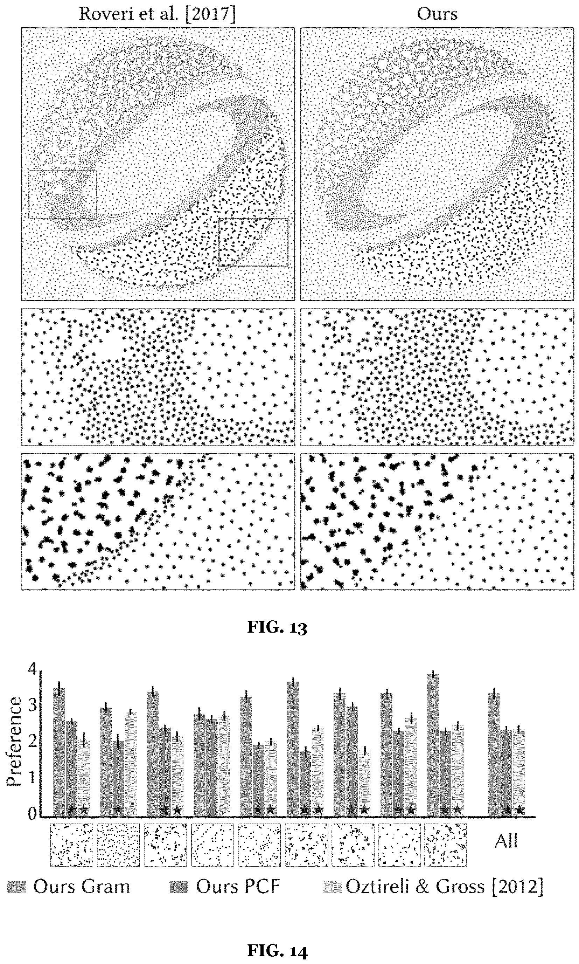

Fig. 13 shows a comparison of the synthesis quality of the presented optimization against Roveri et al. [2017]. To run Roveri et al. method (left), the stored PCFs are used within each pixel of F. The zoom-ins in the bottom two rows show that Roveri et al. cannot handle well the sharp transitions in the correlations.

Fig. 14 shows results of the embedding user experiment. Errors bars are standard errors of the mean. A black or gray star is significance against the presented method at the $p =.001$ or $.005$-level.

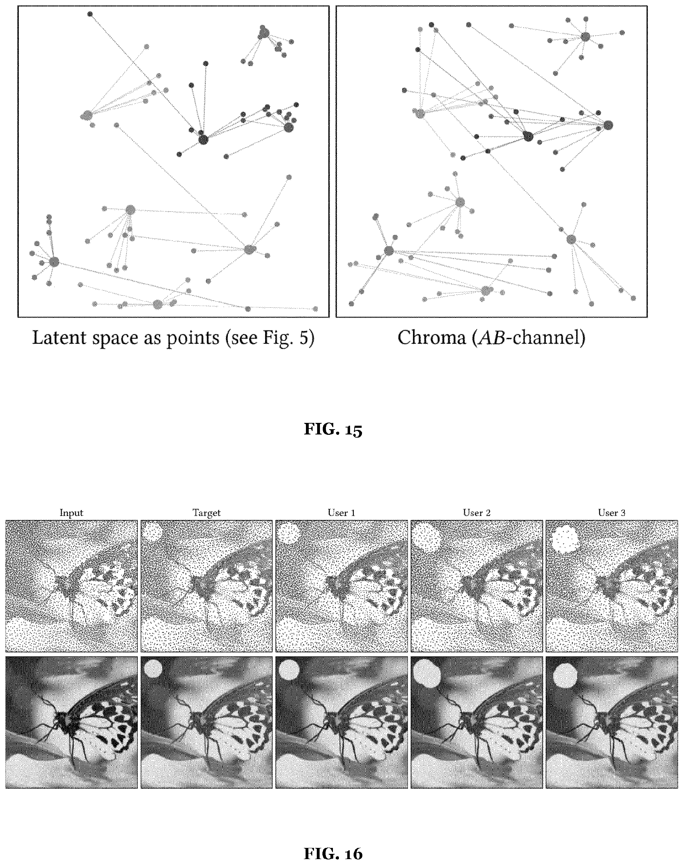

Fig. 15 shows results of the navigation user experiment. Users are shown the latent space visualized as spatially-varying points (Fig. 5) on the left and as spatially-varying chroma on the right. The large dots represent the locations of our selected 8 reference point patterns. The small dots are the locations that the users chose as perceptually similar point patterns with respect to the reference.

Fig. 16 shows user edits from the usefulness experiment. It can be seen that users can use the presented system to design point patterns (first row) by editing L-channel and AB-channel (second row) to match the target one from an initialized input.

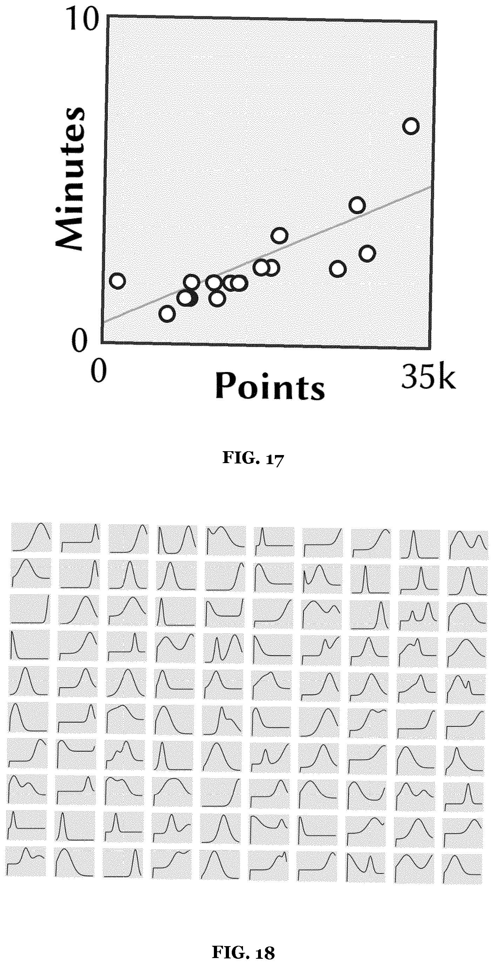

Fig. 17 shows the run-time statistics of the synthesis method with respect to the number of synthesized points.

Fig. 18 shows example power spectra used to learn the perceptual embedding.

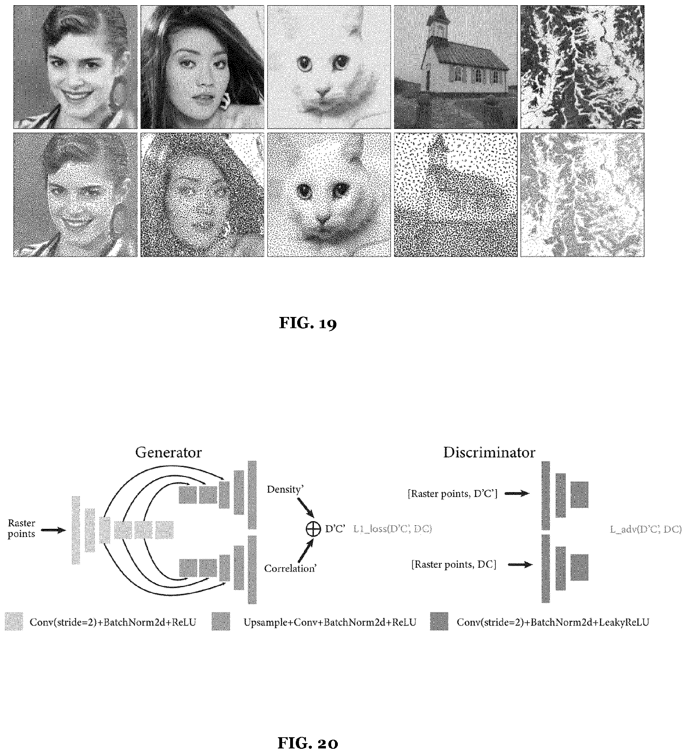

Fig. 19 shows examples of paired training data from human faces, animal faces, churches and tree cover density datasets, respectively.

Fig. 20 shows an adapted cGAN architecture.

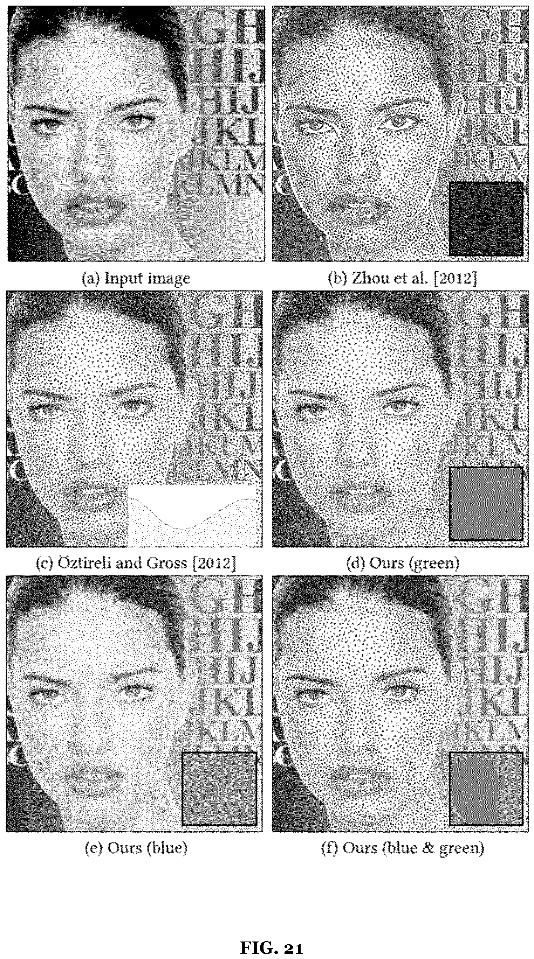

Fig. 21 illustrates how the framework provides a straightforward way to design spatially varying point correlations by picking correlations from our correlation palette. The picked correlations are visualized as chroma in (d), (e) and (f), which automatically find the corresponding PCF from the embedded space.

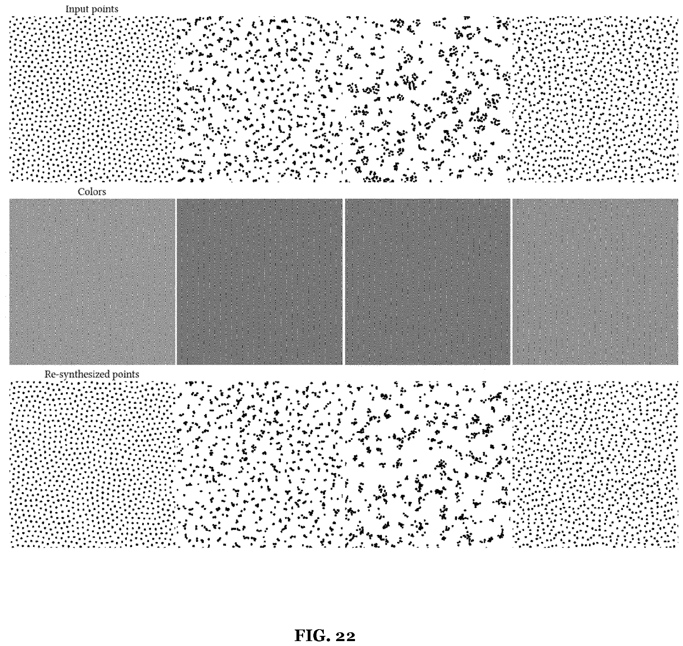

Fig. 22 illustrates a search for four known noises (blue, green, red, step noises) generated by Leimkiihler et al. [2019] their nearest-neighbors in our embedding space using VGG16 Simonyan and Zisserman [2014] based gram metric as shown in main paper equation 1. The color of their nearest-neighbors are shown in the second row. Lastly, the presented synthesis method can be used to realize back similar point patterns.

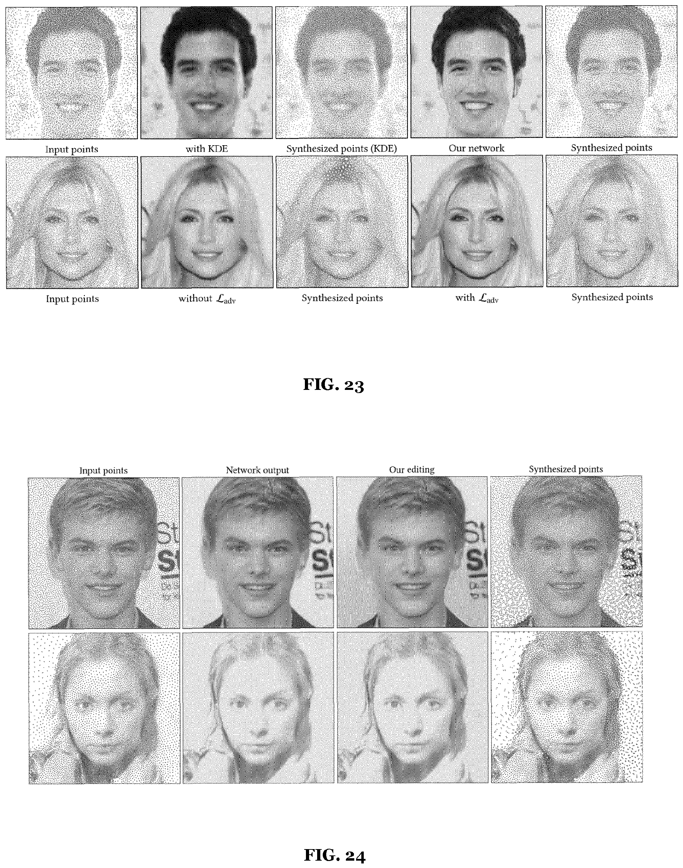

Fig. 23 shows, in the first row, an analysis of the impact of density estimation from given point pattern. Traditional kernel density estimation (KDE) is compared with the presented network density reconstruction. In the second row, the impact of using different losses during training is studied.

Fig. 24 shows generating input points using Salaün et al. [2022] (first row) and Zhou et al. [2012] (second row). These point patterns go as input to our network to obtain the underlying density and correlation map (second column). We change the background correlation in both rows (third column), sharpen the density map and change the hair correlation in the second row, to get edited point patterns (fourth column).

## DETAILED DESCRIPTION OF EMBODIMENTS

The following descriptions are only implementation manners of the present invention, the scope of the present invention is not limited to this. In particular, a preferred embodiment of the present invention is presented under the name Patternshop. Any variations or replacements can be easily made through person skilled in the art. Therefore, the protection scope of the present invention should be subject to the protection scope of the attached claims.

## PATTERNSHOP: EDITING POINT PATTERNS BY IMAGE MANIPULATION

The present disclosure provides a low-dimensional perceptual embedding for point correlations. This embedding can map point patterns to common three-channel raster images, enabling manipulation with off-the-shelf image editing software. To synthesize back point patterns, an edge-aware objective is proposed that carefully handles sharp variations in density and correlation. The resulting framework allows intuitive and backward-compatible manipulation of point patterns, such as recoloring, relighting to even texture synthesis that have not been available to 2D point pattern design before. Effectiveness of the approach is tested in several user experiments.

## INTRODUCTION

Point patterns are characterized by their underlying density and correlations. Both properties can vary over space (Fig. 1), but two key challenges limit the use of such patterns: first, a reliable representation and, second, the tools to manipulate this representation.

While algorithms [Zhou et al. 2012; Öztireli and Gross 2012] are proposed in the literature to generate point patterns with specific correlations (e.g., blue-, green-, pink-, etc. noise), designing specific correlation requires understanding of the power spectrum or Pair Correlation Function (PCF) [Heck et al. 2013] only a handful of expert users might have. Further, the space spanned by these colored noises (correlations) is also limited to a handful of noises studied in the literature [Zhou et al. 2012; Öztireli and Gross 2012]. Addressing this, we embed point correlations in a 2D space in a perceptually optimal way. In that space, two point correlations have similar 2D coordinates if they are perceptually similar. We simply sample all realizable point correlations and perform Multidimensional scaling (MDS) on a perceptual metric, without the need for user experiments, defined on the pairs of all samples. Picking a 2D point in that space simply selects a point correlation. Moving a point changes the correlation with perceptual uniformity.

The next difficulty to adopt point patterns of spatially varying density and correlations is the lack of tools for their intuitive manipulation. Modern creative software gives unprecedented artistic freedom to change images by relighting [Pellacini 2010], painting [Strassmann 1986; Hertzmann et al. 2001], material manipulation [Pellacini and Lawrence 2007; D1 Renzo et al. 2014], changing canvas shape [Rott Shaham et al. 2019], completing missing parts [Bertalmio et al. 2000], as well as transferring style [Gatys et al. 2016] or textures [Efros and Freeman 2001; Zhou et al. 2018; Sendik and CohenOr 2017]. Unfortunately, no such convenience exists when aiming to manipulate point patterns as previous approaches are specifically designed to process three-channel (RGB) raster images. A core idea is to convert point patterns into off-the-shelf three-channel raster image. We preferably use the *CIELAB* color space to encode density as one-dimensional luminance (L) and two-dimensional chroma (AB) as correlation. The resulting images can be manipulated harnessing all the power of typical raster image editing software.

While spatially-varying density is naturally mapped to single channel images, this is more difficult for correlation. Hence, it is often assumed spatially-invariant and represented by either the power spectrum [Ulichney 1987; Lagae and Dutre 2008] or the PCF [Wei and Wang 2011; Öztireli and Gross 2012]. Some work also handles spatially-varying density or/and correlation [Chen et al. 2013; Roveri et al. 2017], but with difficulties in handling sharp variation of density and/correlation. We revisit bilateral filtering to handle sharp variation both in density and correlation.

Finally, we show how to generate detailed spatial *CIELAB* maps of correlation and density given an input point pattern using a learning-based system, trained by density and correlation supervision on a specific class of images, e.g., human faces.

In summary, embodiments of the present invention provide, inter alia, the following contributions: Two-dimensional perceptual embedding of point correlations; spatially-varying representation of point pattern density and perceptually-embedded correlation as LAB raster images; a novel definition of edge-aware correlation applicable to hard edges in density and/or correlation; an optimization-based system to synthesize point patterns defined by density and embedded correlation maps according to said edge-aware definition; intuitive editing of point pattern correlation and density by recoloring, painting, relighting, etc. of density and embedded correlation maps in legacy software such as Adobe Photoshop; and a learning-based system to predict density and embedded correlation maps from an input point pattern.

## PREVIOUS WORK

Sample correlations. Correlations among stochastic samples are widely studied in computer graphics. From halftoning [Ulichney 1987], reconstruction [Yellott 1983], anti-aliasing [Cook 1986; Dippe and Wold 1985] to Monte Carlo integration [Durand 2011; Singh et al. 2019], correlated samples have made a noticeable impact. Recent works [Xu et al. 2020; Zhang et al. 2019] have also shown direct impact of correlated samples on training accuracy in machine learning. Among different sample correlations, blue noise [Ulichney 1987] is the most prominent in literature. Blue noise enforces point separation and is classically used for object placement [Kopf et al. 2006; Reinert et al. 2013] and point stippling [Deussen et al. 2000; Secord 2002; Schulz et al. 2021]. However, modern approaches do not insist on point separation in faithful stippling [Martin et al. 2017; Kim et al. 2009; Deussen and Isenberg 2013; Rosin and Collomosse 2012]. Different kind of colored noises (e.g., green, red) are studied in literature [Lau et al. 1999; Zhou et al. 2012] for half-toning and stippling purposes. But the space spanned by these point correlations is limited to a few bases [Öztireli and Gross 2012]. We propose an extended space of point correlations that helps express large variety of correlations. Our framework embeds these correlations in a two-dimensional space, allowing representation of different correlations with simple two-channel color maps. This makes analysis and manipulation of correlations easier by using off-the-shelf image editing software.

*Analysis.* To analyze different sample correlations, various spectral [Ulichney 1987; Lagae and Dutre 2008] and spatial [Wei and Wang 2011; Öztireli and Gross 2012] tools are developed. For spectral methods, the Fourier power spectrum and it's radially averaged version are used to analyze sample characteristics. In the spatial domain, PCF is used for analysis which evaluates pairwise distances between samples that are then binned in a 1D or a 2D histogram.

*Synthesizing blue-noise correlation.* Blue noise sample correlation is most commonly used in graphics. There exist various algorithms to generate blue noise sample distributions (see Yan et al. [2015]). Several optimization-based methods [Lloyd 1982; Balzer et al. 2009; Liu et al. 2009; Schmaltz et al. 2010; Fattal 2011; De Goes et al. 2012; Heck et al. 2013; Kailkhura et al. 2016; Qin et al. 2017], as well as tiling-based [Ostromoukhov et al. 2004; Kopf et al. 2006; Wachtel et al. 2014] and number-theoretic approaches [Ahmed et al. 2015, 2016, 2017] are developed over the past decades to generate blue noise samples.

*Synthesizing other correlations.* There exist methods to generate samples with different target correlations. For example, Zhou et al. [2012] and Öztireli and Gross [2012] proposed to synthesize point correlations defined from a user-defined target PCF. Wachtel et al. [2014] proposed a tile-based optimization approach that can generate points with a user-defined target power spectrum. All these methods require heavy machinery to ensure the optimization follows the target. Leimkiihler et al. [2019] simplified this idea and proposed a neural network-based optimization pipeline. All these approaches, however, require the user to know how to design a realizable PCF or a power spectrum [Heck et al. 2013]. This can severely limit the usability of point correlations to only handful of expert users. Our framework lifts this limitation and allows us to simply use a two-dimensional space to define correlations. Once a user picks a 2D point, which we visualize as color of different chroma, our framework automatically finds the corresponding PCF from the embedded space and synthesizes the respective point correlations. It is also straightforward to generate spatially varying correlations using our framework by defining a range of colors as correlations. So far, only Roveri et al. [2017] have synthesized spatially varying correlations but remain limited by how well a user can design PCFs.

*Image and point pattern editing.* Editing software allows artists to tailor the digital content to their needs. Since color image is the easily available data representation, today's software are specifically designed to process three-channel (RGB) images. Modern pipelines allow effects like relighting [Sun et al. 2019], recoloring, image retargeting [Rott Shaham et al. 2019], inpainting [Bertalmio et al. 2000], style transfer [Gatys et al. 2016] and texture synthesis [Efros and Freeman 2001; Zhou et al. 2018; Sendik and Cohen-Or 2017] to be performed directly in the three-channel RGB representation. However, most digital assets e.g., materials, color pigments, light fields, patterns, sample correlations, are best captured in high-dimensional space. This makes it hard for image-based software to facilitate editing these components. A lot of research has been devoted in the past to support editing materials [Pellacini and Lawrence 2007; An et al. 2011; D1 Renzo et al. 2014], light fields [Jarabo et al. 2014], color pigments [Sochorova and Jamriska 2021], natural illumination [Pellacini 2010] with work-flows similar to images.

Synthesizing textures with elements [Ma et al. 2011; Reinert et al. 2013; Emilien et al. 2015; Reddy et al. 2020; Hsu et al. 2020] and patterns with different variations [Guerrero et al. 2016] using 2D graphical primitives has also been proposed. These work focus on updating point and element locations to create patterns for user-specific goals and designing graphical interface for user interactions. However, none of the previous work allows editing spatially-varying point correlations in an intuitive manner. Herein, a pipeline is presented to facilitate correlation editing using simple image operations. Instead of directly working with points, we encode their corresponding spectral or spatial statistics in a low-dimensional (3-channel) embedding. This low-dimensional latent space can then be represented as an image in order to allow artists to manipulate point pattern designs using any off-the-shelf image editing software. There exists previous work that encodes point correlations [Leimkiihler et al. 2019] for a single target or point pattern structures [Tu et al. 2019] using a neural network. But these representations do not disentangle the underlying density and correlation, thereby, not facilitating editing operations.

*Latent and perceptual spaces.* Reducing high-dimensional signals into low-dimensional ones has several benefits. Different from latent spaces in generative models which are still high-dimensional, such as for StyleGAN [Abdal et al. 2019], the application we are interested in here is a usability one, where the target space is as low as one-, two- or three- dimensional, so users can actively explore it, e.g., on a display when searching [Duncan and Humphreys 1989]. This is common to do for color itself [Fairchild 2013; Nguyen et al. 2015]. Ideally, the embedding into a lower dimension is done such, that distance in that space is proportional to perceived distances [Lindow et al. 2012]. This was pioneered by Pellacini et al. [2000] for BRDF, with a methodology close to ours (MDS). Other modalities, such as acoustics [Pols et al. 1969], materials [Wills et al. 2009], textures [Henzler et al. 2019] and even fabricated objects [Piovarci et al. 2018] were successfully organized in latent spaces.

## OVERVIEW

Fig. 3 shows the workflow of the preferred embodiment called Patternshop: A user selects a point pattern with spatially varying density and correlation and runs this through a Neural Network (NN) to produce a three-channel raster image. Alternatively, they can draw that image directly, ab-initio in a program like Adobe Photoshop or GIMP. This raster image can then be edited in any legacy software. Density can be manipulated by editing luminance. To change correlation, we provide a perceptual 2D space of point correlations (Fig. 5). This space is perceptually uniform, i.e., distances are proportional to human perception and covers a wide range, i.e., it contains most realizable points correlations. Figure 2 demonstrates one such example edit. A user may edit spatially varying density (Fig. 2b) or correlation (Fig. 2c) or both (Fig. 2a) using our three-channel representation. A final optimizer produces the edited point pattern.

Correlations are generally characterized by a PCF or power spectrum. A PCF encodes spatial statistics-e.g., the pairwise distances between points-distributed over an m-bin histogram. Handling such an m-dimensional correlation space is neither intuitive nor supported by existing creative software. To tackle this problem, further below, we embed Pair Correlation Function (PCF) into a two-dimensional space. We optimize the distance between all pairs of latent coordinates in that space to be proportional to the perceived visual distance between their point pattern realizations.

Moreover, synthesizing such patterns requires support for edge-aware transitions for both density and correlation. Below, we outline our formalism to handle such edge-aware density and correlations. Then, the optimization objective is defined that enables finding a point pattern to have the desired density and correlation. Finally, various application scenarios supported by the presented pipeline are outlined, followed by comparative analyses, concluding discussions and future works.

## LATENT EMBEDDING OF POINT CORRELATIONS

*Overview.* In order to encode the correlation of a point pattern as a 2D coordinate, we first generate a corpus of basic point patterns (each with constant correlation). Next, we extract perceptual features of these patterns. The pairwise distance between all features forms a perceptual metric. This metric is used to embed a discrete set of basis correlations into a 2D space. From this discrete mapping, we can further define a continuous mapping from any continuous correlations into a latent space as well as back from any continuous latent space coordinate to correlations. This process is a precomputation, only executed once, and its result can be used to design many point patterns, same as one color space can be used to work with many images. We detail each step in the following:

*Data generation.* First, we systematically find a variety of point patterns to span a gamut of correlations $\{g_i\}$. We start by

defining a power spectrum as a Gaussian mixture of either (randomly) one or two modes with means randomly uniform across the domain and uniform random variance of up to a quarter of the unit domain (Fig. 4a). Not all such power spectra are realizable, therefore, we run a gradient descent optimization [Leimkiihler et al. 2019] to obtain realizable point patterns (Fig. 4b). We finally use the PCF of that realization $P_i$ as $g_i$.

*Metric.* A perceptual metric $D_i$ assigns a positive scalar to every pair of stimuli $i$ and $j$ (here: point patterns) which is low only if the pair is perceived similar. As point patterns are stationary textures, their perception is characterized by the spatially aggregated statistics of their visual features [Portilla and Simoncelli 2000]. Hence, the perceived distance between any two point patterns with visual features $v_i$ and $v_j$ is their $\mathcal{L}_1$ distance $\mathcal{D}_{i,j} = |v_i - v_i|_1$.

To compute visual feature statistics $v_i$ for one pattern $P_i$, we first rasterize $P_i$ three times with point splats of varying Gaussian splat size of 0.015, 0.01 and 0.005 [Tu et al. 2019]. Second, each image of that triplet is converted into VGG feature activation maps [Simoncelli and Olshausen 2001]. Next, we compute the Gram matrices [Gatys et al. 2016] for the pool_2 and pool_4 layers in each of the three images. Finally, we stack the triplet of pairs of Gram matrices into a vector $v_i$ of size $3 \times (64^2 + 128^2) = 61440$.

Figure 4 shows four example patterns leading to a $4 \times 4$ metric.

*Dimensionality reduction.* To first map the basis set of $\{P_i\}$ to latent 2D codes, we apply MDS (Fig. 4f). MDS assigns every pattern $P_i$ a latent coordinate $z_i$ so that the joint stress of all assignments

$$c_{\mathrm{Emb}}(\{z_i\}) = \sum_{i,j} (\mathcal{D}_{i,j} - ||z_i - z_j||)^2 \qquad (1)$$

is minimized across the set $\{z_i\}$ of latent codes.

After optimizing with Eq. (1), we rotate the latent coordinates, so that blue noise is indeed distributed around a bluish color of the chroma plane and then normalize the coordinates to [0, 1].

*Encoding.* Once the latent space is constructed, we can sample correlation g at any continuous coordinate z in the latent space using the Inverse Distance Weighted (IDW) method:

$$f(z) = \sum_i g_i w_i(z) / \sum_i w_i(z) \quad \text{with} \qquad (2)$$

$$w_i(z) = 1/\max((||z - z_i||_2)^{\phi(z)}, 10^{-10}). \qquad (3)$$

The idea is to first compute the distance between the current location z and the existing locations zi in the MDS space. The inverse of these distances, raised to a power $\phi$ (z), is used as the weight to interpolate the correlations $g_i$. $\phi \in \mathbb{R}^2 \mapsto \mathbb{R}$ is a function that is low in areas of the latent space with a low density of examples and high for areas where MDS has embedded many exemplars. We implement $\phi$ by kernel density estimation on the distribution $\{z_i\}$ itself with a Parzen window of size 0.01 and clamping and scaling this density linearly to the (3, 6)-range. *Decoding.* We can now also embed any correlation $\bar{g}$, that is not in the discrete basis set $\{g_i\}$. Let $\bar{v}$ be the visual features stats of $\bar{g}$. We simply look up the visual-feature-nearest training exemplar and return its latent coordinate

$$f^{-1}(g) = \arg\min_{z_i} ||\bar{v} - v_i||_2. \qquad (4)$$

Latent space visualizations. The latent space f(z) of correlations is visualized in Fig. 5 and more visualizations can be found in Fig. 22. Every point in (z) is a PCF and we use the machinery that will be defined below to generate a point pattern that has such a spatially-varying correlation.

## EDGE-AWARE DENSITY AND CORRELATIONS

*Assumptions.* Input to this step is a discrete point pattern *P,* a continuous density field d and a continuous guide field *h*. The aim is to estimate correlation at one position so it is unaffected by points that fall onto locations on the other side of an edge. Output is a continuous spatially-varying correlation field.

Definition. We define the edge-aware radial density function as

$$\hat{g}(P, d, h)(\mathbf{x}, r) = \sum_{i=1}^{n} \kappa(\mathbf{x}, \mathbf{x}_i, r, d, h), \qquad (5)$$

a mapping from location x, radius r to density, conditioned on the point pattern *P* subject to the kernel

$$\kappa(\mathbf{x}, \mathbf{x}_i, r, d, h) = \frac{\mathcal{S}(\mathbf{x}_i, \mathbf{x}, r, d) \cdot \mathcal{H}(\mathbf{x}_i, \mathbf{x}, h)}{\sum_{\mathbf{y} \in \mathbb{R}^2} \mathcal{S}(\mathbf{y}, \mathbf{x}, r, d) \cdot \mathcal{H}(\mathbf{y}, \mathbf{x}, h)}, \qquad (6)$$

that combines a *spatial* term S and a *guidance* term H, both to be explained next. Intuitively, this expression visits all discrete points xi and soft-counts if they are in the "relevant distance" and on the "relevant side" of the edge relative to a position x and a radius *r*.

*Spatial term.* The spatial S-term is a Gaussian N with mean r and standard deviation (bandwidth) $\sigma$. It is non-zero for distances similar to r and falls of with bandwidth $\sigma$:

$$\mathcal{S}(\mathbf{x}_i, \mathbf{x}, r, d) = \mathcal{N}\left(\frac{\|\mathbf{x}_i - \mathbf{x}\|_2}{d(\mathbf{x})}; r, \sigma\right) \qquad (7)$$

The distance between two points is scaled by the density at the query position. As suggested by Zhou et al. [2012], this assures that the same pattern at different scales, i.e., densities, indeed maps to the same correlation. Bandwidth $\sigma$ is chosen proportional to the number of points *n*.

Guidance term. The H-term establishes if two points x and $x_i$ in the domain are related. This is inspired by the way Photon Mapping adapts its kernels to the guidance by external information such as normals [Jensen 2001] or joint image processing makes use of guide images [Petschnigg et al. 2004]. If x is related to $x_i$, $x_i$ is used to compute correlation or density around x, otherwise, it is not. Relation of x and $x_i$ is measured as the pair similarity

$$\mathcal{H}(\mathbf{x}, \mathbf{x}_i, h) = \|h(\mathbf{x})^{\mathsf{T}} \cdot \Sigma \cdot h(\mathbf{x}_i)\|, \qquad (8)$$

where *A* is a guidance map and $\Sigma$ is the (diagonal) bandwidth matrix, controlling how guide dimensions are discriminating against each other. The guidance map can be anything with distances defined on it, but our results will use density and correlation itself.

*Normalization.* The denominator in Eq. (6) makes the kernel sum to 1 when integrated over y for a fixed x as in normalized convolutions [Knutsson and Westin 1993]. Also, if $\kappa$ extends outside the domain for points close to the boundary, this automatically re-scales the kernel.

*Example.* Fig. 6 shows this kernel in action. We show the upper left corner of the domain (white) as well as some area outside the domain (grey with stripes). Correlation is computed at the yellow point. The kernel's spatial support is the blue area. The area outside the domain (stripes) will get zero weight. Also, the blue area inside the domain which is different in the guide (due to different correlation) is ignored (white vs. blue points).

*Discussion.* Our formulation is different from the one used by Chen et al. [2013], who warp the space to account for guide differences, as Wei and Wang [2011] did for density variation. This does not work for patterns with varying correlation: a point on an edge of a correlation should not contribute to the correlation of another point in a scaled way. Instead of scaling space, we embed points into a higher dimensional space [Chen et al. 2007; Jensen 2001] only to perform density estimation on it.

Consider estimating the PCF at the yellow point, close to an edge between an area of blue and an area of green noise as shown on Fig. 7. The dark gray point lies on the other side of the edge. In common bilateral handling, it would contribute to a different bin (orange horizontal movement, distance in PCF space) in the formulation of Wei [2010], which is adequate for density, but not for correlation. Our approach suppresses those points (blue arrow and vertical movement, density in PCF space).

## SYNTHESIS AND EDITING

We will now derive a method to synthesize a point pattern with a desired spatially varying target density and correlation. Users can then provide these target density and correlation as common raster images and edit them in legacy software.

## Synthesizing with desired correlation and density

Given Eq. (5) we can estimate $\hat{g}(P, d, h)$, the spatially-varying PCF field for a triplet of point pattern $P$, density $d$ and guide $h$. Recall, we can also compare this spatially-varying PCF to another one, we shall call $\bar{g}$, e.g., by spatially and radially integrating their point-wise norms. Hence, we can then optimize for a point pattern P to match a given density $d$, a given guide $h$ and a given target PCF $\bar{g}$ by

$$\arg\min_P c_{\text{Syn}}(P) = \int_x \int_r (\hat{g}(P, d, h)(\mathbf{x}, r) - \bar{g}(\mathbf{x}, r))^2 \, \mathrm{d}\mathbf{x} \, \mathrm{d}r. \quad (9)$$

To limit estimation of correlation at one position in $P$ to a neighborhood with the same correlation in the target (Fig. 6) the correlation itself is used as a guide $h = \bar{g}$.
Note, that we do not explicitly ask the result $P$ to have a specific density. This happens implicitly: recall, that our edge-aware correlation estimate Eq. (7) will scale point-wise distances according to density before computing the PCF. Hence, the only way for the optimization to produce the target $\bar{g}$ is to scale the distances proportional to density.
In practice, we Monte Carlo-estimate this objective using $10 \times 10$ jittered samples along the spatial and m regular samples {y$_i$} along the radius dimension, as in

$$\hat{c}_{\text{Syn}}(P) = \sum_{i=1}^{10\times10} \sum_{j=1}^{m} (\hat{g}(P, d, \bar{g})(\mathbf{y}_i, r_j) - \bar{g}(\mathbf{y}_i, r_j))^2. \quad (10)$$

and optimize over $P$ using ADAM [Kingma and Ba 2014].
To have this synthesis produce a point pattern $P$, a user now only needs to provide a spatially-varying density $d$ and correlation $\bar{g}$.

## Encoding into raster images

Preferably, users provide density $d$, and correlation $\bar{g}$ as common discrete raster images on which we assume suitable sampling operations to be defined (e.g., bilinear interpolation) to evaluate them at continuous positions.
For density $d$, this is trivial and common practice in the point pattern literature. For correlation, $\bar{g}$, we use our embedding $f$ to decode the complex PCF from a latent 2D coordinate, from only two numbers per spatial location. Hence, density and correlation require only three numbers per spatial position. We pack those three numbers into the three image color channels. More specifically, density into the $L$ and latent correlation into the $AB$ channel of a *CIELAB* color image, we call $F$.

## Editing point patterns as raster images

Any editing operation that is defined on a three-channel image in any legacy image manipulation software can now be applied to the point pattern feature image $F$.
Working in *CIELAB* color space, users have freedom to select the first-channel to edit density, the two latter channels to edit the correlations, or edit both at the same time. Since $L$ and $AB$ channels do not impact each other, *CIELAB* color space is ideal for manipulating the density or the correlation independently as luminance and chrominance are perceptually decorrelated by-design.
While this is in a sense the optimal space to use when editing point patterns in legacy image editing software, it is not necessarily an intuitive user interface. In a fully-developed software system, on top of legacy software, a user would not be shown colors or pick colors to see, respectively, edit, correlations. Instead, they would only be presented the point pattern, and select from an image similar to Fig. 5, and all latent encoding would be hidden. We will give examples of such edits below. For the case of ab-initio design, no input is required and a user would freely draw correlation and density onto a blank canvas.

## IMPLEMENTATION

We implement our framework mainly in PyTorch [Paszke et al. 2017]. All experiments run on a workstation with an NVIDIA GeForce RTX 2080 graphics card and an Intel(R) Core(TM) i7-9700 CPU @ 3.00GHz.

*Embedding.* In total, we collect 1,000 point patterns and each of them has 1,024 point samples. To perform MDS, the latent coordinates $\{z_i\}$ are initialized randomly on (0,1). The MDS optimization Eq. (1) runs in batches of size 20, using the ADAM optimizer [Kingma and Ba 2014] with a learning rate of 0.005 for 1, 000 iterations.

If latent coordinates are quantized to 8 bit, there is only $256^2$ many different possible correlations $\{g_i\}$. We precompute these and store them in a $256 \times 256 \times m$ look-up table lut w.r.t. each latent 2D coordinate to be used from here on.

*Edge-aware PCF estimator.* To compute the pair similarity between two guide values in $h$, the bandwidth matrix $\Sigma$ is preferably set to be 0.005-diagonal. We preferably use $m$ = 20 bins to estimate the PCF. The binning is performed over

$$r_{\max} = 2\sqrt{\frac{1}{2\sqrt{3}n}}$$

the distance range from preferably 0.1 to 2 $r_{\max}$, where . The point count $n$ is chosen as the product between a constant and the total inverse intensity in the $L$-channel of the given feature image $F,$ such that an image with dark pixels has more points. To compute local PCF for each pixel in $F,$ we consider only the $k$-nearest neighbor points, and not all points, where $k$ =50 and $\sigma$ =0.26.

With each PCF, $g_i$ we also pre-compute and store $\lambda_i$, the best Learning Rate (LR) (see below for a definition) as we found different spectra to require different LRs. During synthesis, we find the LR for every point, by sampling the correlation field at that point position and using the LR of the manifold-nearest exemplar of that correlation.

*Synthesis.* The initial points when minimizing Eq. (9) are preferably randomly sampled proportional to the density map $d$ and the optimization preferably runs for 5,000 iterations. We note that the denominator in Eq. (5) is a sum over many points which could be costly to evaluate, but as it does not depend on the point pattern $P$ itself, it can be pre-computed before optimizing Eq. (9). We use C++ and Pybind11 to accelerate this computation and the whole initialization stage takes around 5 seconds.

To faithfully match the intensity of point stipples with the corresponding density map [Spicker et al. 2017], we preferably also optimize for dot sizes as a post processing step.

*Editing.* We use Adobe Photoshop 2022 for editing which has native *CIELAB* support. We devised two simple interfaces scripted into Adobe Photoshop 2022, one for interactive visualization of colors and point correlations and the other for editing and synthesis.

## RESULTS

In this section, we demonstrate our design choices and compare our pipeline with existing methods through some application scenarios. We also perform a user study to evaluate the effectiveness and usability of our framework.

### Ab-initio point pattern design

We demonstrate examples of point pattern edits in Fig. 1 and Fig. 8. We start with a given density and correlation map (1st and 3rd columns). We choose blue noise for the correlation map to start with and start editing both the density (*L*-channel) and the correlation (*AB*-channel). For Fig. 1, we add density gradient transition on the background and add a simple leaf by editing the density channel. We also assign different correlations to different segments like the butterfly, leaf and background. For Fig. 8, the correlation edits are done in the *AB* channel of the Picasso image to assign different correlations to different image segments, e.g., background, face, cap and the shirt. We also add a gradient density in the background from left to right by editing the *L*-channel of the image.

We show more results in Fig. 21 to demonstrate that the presented framework provides a straightforward way to edit spatially-varying point correlations by picking correlations from our correlation space (Fig. 5), instead of by designing PCFs or power spectra.

### Neural network-aided point pattern design

Besides manually drawing correlation and density, we propose a second alternative: a NN, based on pix2pix [Isola et al. 2017], which automatically produces density and correlation maps from legacy point patterns. We curated paired synthetic datasets for class specific training from three categories, including human faces from CelebA by Lee et al. [2020], animal faces from Choi et al. [2020] and churches from Yu et al. [2015]. As the NN maps point patterns to raster images, training data synthesis proceeds in reverse: For each of the three-channel raster image, the gray-scale image of each original image is directly used as the *L*-channel. We generate the correlation map (*AB*-channel) by assigning them random chroma i.e., latent correlation coordinates. Next, our synthesis is used to instantiate a corresponding point pattern. Finally the patterns is rasterized, as pix2pix works with raster images. For further data generation, network architecture and training details, please see below. We also perform an ablation study on the network architecture and training in Fig. 23.

This pipeline enables freely changing local density or correlation in point patterns of different categories as seen in Fig. 9. As shown in Fig. 10, this also allows advanced filtering such as relighting or facial expression changes on point patterns. In Fig. 24, we show additional results where the input point patterns, generated by other image stippling methods [Zhou et al. 2012] [Salaiin et al. 2022], can be edited using our framework.

**Point pattern expansion**

Here we train our network on density from the Tree Cover Density [Büttner and Kosztra 2017] dataset in combination with random spatially-varying correlation maps using anisotropic Gaussian kernel with varying kernel size and rotation as detailed below. Similar works can be found in Kapp et al. [2020], Tu et al. [2019] and Huang et al. [2022] for sketch-based or example-based point distribution synthesis.

Figure 11 illustrates one such representative example of point-based texture synthesis using our method. Our network reconstructs the density and correlation map that captures the gradient change of correlation and spatially-varying density. By using the content-aware filling tool in Adobe Photoshop, we can perform texture expansion (second column) based on the network output. More specifically, we first expand the canvas size of the map, select the unfilled region, and use context-aware filling to automatically fill the expanded background. We also compare our method with a state-of-the-art point pattern synthesis method from Tu et al. [2019] which takes an exemplar point pattern as input and uses VGG19 [Simonyan and Zisserman 2015] features for optimization.

**Realizability**

We construct the manifold Fig. 5 from exemplars that are realizable, but an interpolation of realizable PCFs is not guaranteed to be realizable. We test if realizability still holds in practice as follows. For each PCF $gz_i$), we generate a point set instance using our method and compute the resulting PCF $g'(z_i)$. We then compute $A = \mathbb{E}_i\left[\left(\left|g'\left(z_i\right) - \left(z_i\right)\right|\right)\right]$, the average error between PCF and realized PCF and $B = \max_{ij}(|g(z_j) - g(z_i)|)$ the maximum difference between any two PCFs. The relative error A/B is $3 \times 10^{-5}$, indicating that the realization error is five order of magnitude smaller than the PCF signal itself.

**Comparisons**

*Comparisons with* Öztireli *and Gross* [2012]. To the best of our knowledge, Öztireli and Gross [2012] is the most relevant related work which studies the space of point correlations using PCFs. However, we observe that PCFs are not the best way to characterize the perceptual differences between different point correlations. In Fig. 12, we show that the Gram matrices (our input proximity to MDS) better encode the perceptual similarity between neighboring point correlations.

*Comparisons with Roveri et al. [2017].* Figure 13 shows two examples of synthesizing point patterns using our synthesis method and the synthesis method proposed by Roveri et al. [2017]. To the best of our knowledge, Roveri et al. [2017] is the only competitor that supports point pattern synthesis from spatially-varying density and correlation. We demonstrate that their method may synthesize point patterns with artifacts around the sharp transitions between two correlations (middle of the sunflower and top-left of the logo). Our method, by taking the bilateral term into account, can handle sharp transition between correlations more accurately.

This relation can be further quantified as follows: Let P be a point pattern, $\overline{P}$ be an edited version of that and (*P*), respectively, $g(\overline{P})$ be their correlations. Now, first, let $g_{PCA}(\overline{P})$ be the correlations of $\overline{P}$, projected into the space spanned by the PCA of the correlations in and only in *P*, and, second, $g_{Ours}(\overline{P})$ be the correlations of $\overline{P}$, projection into our palette (Fig. 5). The error of those projections is $e_{PCA} = |g_{PCA}(\overline{P}) - (\overline{P})|$ and $e_{Ours} = |g_{Ours}(\overline{P}) - g(\overline{P})|$, respectively. We evaluate these error values for different figures. Fig. 1 shows 96× improvement, Fig. 8 shows 130× improvement and the three rows in Fig. 9 shows 471×, 461× and 59× improvement using our approach ($e_{Ours}$ vs. $e_{PCA}$). This indicates that our latent space can preserve one to two order of magnitudes more edit details than Roveri et al. [2017] approach which restricts itself to the input exemplar.

**User study**

We performed a set of user experiments to verify i) the perceptual uniformity of our embedding ii) the ability of users to navigate in that space iii) the usefulness of the resulting user interface.

*Embedding user experiment.* 34 subjects (S) were shown a self-timed sequence of 9 four-tuples of point patterns with constant density and correlation in a horizontal arrangement (Fig. 12). The leftmost pattern was a reference. The three other patterns were nearest neighbors to the reference in a set of: i) our basis patterns using our perceptual metric, ii) our basis patterns using PCF metric, and iii) patterns from the PCF space suggest by Öztireli and Gross [2012] using PCF metric. Ss were instructed to rate the similarity of each of the three leftmost patterns to the reference on a scale from 1 to 5 using radio buttons.

The mean preferences, across the 10 trials, were a favorable 3.59, 2.52 and 2.55 which is significant ($p$ < .001, two-sided $t$-test) for ours against both other methods. A per-pattern breakdown is seen in Fig. 14. This indicates our metric is perceptually more similar to user responses than two other published ones. Figure 12 shows two examples where the nearest-neighbor of the query point pattern is perceptually different using different metrics. The PCF of two point patterns can be similar even when they are perceptually different.

*Navigation user experiment.* In this experiment, $N = 9$ Ss were shown, 8 reference point correlations and, second, the palette of all correlations covered by our perceptual embedding (Fig. 5). Ss were asked to pick coordinates in the second image by clicking locations in the embedding, so that the corresponding point correlations of the picked coordinates perceptually match the reference correlations.

The users' locations were off by 14.9 % of the embedding space diagonal. We would not be aware of published methods for intuitive correlation design to compare this number to. Instead, we have compared to the mistakes users make when picking colors using the LAB color picker in Adobe Photoshop. Another $N = 9$ Ss, independent to the ones shown the palette of correlations, made an average mistake of 21.3% in that case. We conclude, that our embedding of pattern correlation into the chroma plane is significantly more intuitive ($p$ <0.2, $t$ test) than picking colors. Fig. 15 shows the points users clicked (small dots), relative to the true points (large dots).

*Usefulness experiment.* Ss were asked to reproduce a target stippling with spatially varying correlation and density by means of Adobe Photoshop that was enhanced to handle point correlation as LAB space using our customized interface. Ss were shown the point patterns of our perceptual latent space, and asked to edit the density and correlation separately to reproduce the reference from an initialized LAB image. After each editing, generating the point pattern incurred a delay of one minute. Note that we intentionally reduce the number of iterations to optimize the point patterns from user edits to offer faster feedback in around a minute with around 10,000 points. There is no objective metric to measure the result quality, so we report three user-produced point patterns in Fig. 16. The whole process takes 15 minutes on average for all three users, as they usually require multiple trials on picking the correlations and our synthesis method does not run interactively.

### Performance

We summarize the run-time statistics of our synthesis method w.r.t. the number of synthesized points in Fig. 17. Editing time is not reported as it may be biased by the editing skills of the users.

### CONCLUSION

We propose a novel framework to facilitate point pattern design, by introducing a perceptual correlation space embedded in a two-channel image using a dimensionality reduction method (MDS). This allows users to design or manipulate density and correlation by simply editing a raster image using any off-the-shelf image editing software. Once edited, the new features can be resynthesized to the desired point pattern using our optimization. To better handle sharp transitions in density and correlation during synthesis, we formulate a novel edge-aware PCF estimator. The resulting framework allows wide range of manipulations using simple image editing tools that were not available to point patterns before. Users can design novel spatially varying point correlations and densities without any expert knowledge on PCF or power spectra or can use a NN to get correlation and density for a specific class, such as faces.

*Limitations.* The latent space spanned by the bases point correlations in Fig. 5 is by no means perfect. Synthesizing point patterns with smooth transitions from two extreme locations in the latent space may result in some unwanted artifacts. Our synthesis method takes minutes to synthesize points which is far from interactive rate that is more friendly to artists and users.

*Future work.* A neural network with such latent space is a promising direction where the correlations within the geomatic data can be predicted and edited according to user-defined conditions (environment, pollution, global warming, etc). Our approach happens to rasterize points, which ideally is to be replaced by directly operating on points Qi et al. [2017]; Hermosilla et al. [2018].

The editing operations can also be improved by proper artistic guidance or by interactive designing tools that intuitively manipulate the desired density and correlations for desired goals. Extending our pipeline for visualization purposes is another fascinating future direction. Another interesting future direction is to extend the current pipeline to multi-class and multi-featured point patterns, which appear in real-world patterns. Designing a latent pattern space that spans a larger gamut of correlations (also anisotropic and regular ones) present in nature (e.g., sea shells, tree, stars, galaxy distributions) is a challenging future problem to tackle. There is an exciting line of future works that can be built upon our framework. Many applications like material appearance, haptic rendering, smart-city design, re-forestation, planet colonization can benefit from our framework.

## ADDITIONAL IMPLEMENTATION DETAILS

### Point correlations generation

We use a mixture of Gaussians to sample the gamut of possible power spectra. We use power spectra here, as they allow us to directly work with different range of frequencies unlike Pair Correlation Functions (PCFs). The value of a power spectrum bin $pb$ is computed as

$$p_b = \sum_{i=1}^{n_{\text{GMM}}} \left( w_i \cdot \exp(-\frac{(b - \mu_i)^2}{2\sigma_i^2}) \right) + \gamma. \qquad (1)$$

We use a mixture with, randomly, either $n_{\text{GMM}} = 1$ or $n_{\text{GMM}} = 2$ Gaussians and sample the parameters from the range $\gamma \in \{0, 1\}$, $\mu_i \in [0, 68]$, $\sigma_i \in [2, 12]$, and $w_i \in [1, 3]$, respectively, so as to cover the required range of frequencies, including blue, green and red noises. We vary $b$ from 0 to $m = 63$. The DC $p_0$ is set to 0. A sample of 100 random power spectra produced by this approach is seen in Fig. 18.
The generated power spectra are only used to run the method of Leimkiihler et al. [2019] to produce a point pattern that is used in the following steps, while the power spectrum can be discarded.

### Optimal learning rate details

The best Learning Rate (LR) $\lambda$ for a correlation $g$ is the one out of 0.02, 0.01, 0.005, 0.001, 0.0005, 0.0001 and 0.00005 that, when using a fixed number of 1000 iterations to minimize PCF error of a randomly initialized pattern, leads to the lowest VGG error. We find these $\{\lambda_i\}$ in a grid search pre-process for the set of all training PCFs $\{g_i\}$.

### Data generation for neural network-aided point pattern design

We achieve this by utilizing our proposed latent space and a large set of images to generate a dataset with varying density maps (represented by gray-scale images) and varying correlation maps (represented by different colors). All the density and correlation maps have the same resolution $256 \times 256$.
For each density and correlation map of the following datasets, our synthesis is used to generate a point pattern with spatially varying density and correlation to get pairs (a point pattern, a density and correlation map) for training our networks. The number of points is computed as $n = 50,000 \times \mathbb{E}_y (1 - d(y))$. Fig. 19 shows examples of paired training data from different datasets.
Human faces stippling dataset. We generate the human faces stippling dataset using the face images from Lee et al. [2020]. We use 10,000 gray-scale face images as the density maps. Each of the face images are used to generate two correlation maps, one for uniform correlation with a random chroma assigned to all pixels, another for spatially-varying correlations. To generate a spatially-varying correlation map, we utilize the facial segmentation masks including skin, hair, background and generate a correlation map by assigning random chroma to each of the segment. In total, we generate 20,000 density and correlation maps.
Animal faces and outdoor churches stippling datasets. Similarly, we use the gray-scale images of animal faces [Choi et al. 2020] and outdoor churches [Yu et al. 2015] as density maps for the two datasets. Different from the human faces dataset Lee et al. [2020], no segmentation masks are provided for animals faces and churches. Therefore, for each density map, we generate a uniform correlation map by randomly sampling a color and assign it to all pixels. In total, we generate around 15,000 density and correlation maps.
Tree Cover Density dataset for point pattern expansion. We use the Tree Cover Density data [Büttner and Kosztra 2017] as our density maps. To generate a correlation map for each density map, we generate either a uniform correlation maps or a spatially-varying correlation maps using anisotropic Gaussian kernels with varying locations, kernel sizes and orientations. To generate a uniform correlation map, we randomly sample a color and assign it to all pixels. To generate a spatially-varying correlation map, the number of Gaussian kernels is randomly sampled from [2, 16]. For each of the Gaussian kernel, the location (mean) is randomly sampled in [0, 1], the orientation is randomly sampled from [-180, 180] degrees and the kernel size (variance) for x-, y-axis are randomly sampled from [0.15, 0.25]. The Gaussian kernels are summed with equal weight to generate a correlation map. In total, we generate around 20,000 density and correlation maps.

**Network architecture and training**

Fig. 20 shows the details of our network architecture, adapted from the cGAN [Isola et al. 2017] framework. In the generator side, we take rasterized points as input and output the density and correlation maps in separate branches. The density and correlation predictions are concatenated in the output layer followed by a Sigmoid function. We use a U-Net architecture with 6 down-sampling and up-sampling layers with skip connections. For the discriminator, we use a three layer convolutional architecture to extract patch-based features.

Point patterns are preferably rasterized to a resolution of $256 \times 256$ as input. Output is the three-channel image for each rasterized point pattern. Compared with the original framework [Isola et al. 2017], the major change is to use two branches for regressing density and correlation map separately for better quality. Predicted density and correlation are preferably concatenated at the last layer, preferably followed by a Sigmoid function to normalize output values between [0, 1]. The network can preferably be trained with a combination of $\mathcal{L}_1$ loss and adversarial loss $\mathcal{L}_{adv}$ between the output and the ground truth. A total loss can be defined as $\mathcal{L}_{tot} = L_1 + 0.001\,\mathcal{L}_{adv}$ and minimized to update network weights during training. We use the ADAM optimizer [Kingma and Ba 2014], with an initial learning rate of 0.0001 for both generator and discriminator and a batch size of 8. Learning rate decays by half after every 100 epochs. The network is trained for 400 epochs in 24 hours. With each $256 \times 256$ rasterized point image as input, the network inference time is about 0.005 seconds per frame to get the density and correlation map with a resolution of $256 \times 256 \times 3$.

**ADDITIONAL RESULTS**

**Latent space**

One property about our point correlation embedding space is that we locate some known point correlations to their corresponding semantic colors including blue, green, pink/red and step noises generated by Leimkiihler et al. [2019]. The found colors can roughly match the semantic meaning, as shown in Fig. 22. More specifically, we search those four noises (blue, green, red, step noises) in our embedding space using Eq. 4 in the main paper. The colors of their nearest-neighbors are shown in the second row. The colors are then used to re-synthesize the point sets as shown in the third row.

**Ab-initio point pattern design**

In Fig. 21, we compare our *CIELAB* space representation to traditional approaches [Zhou et al. 2012; Öztireli and Gross 2012]. Unlike these methods, we do not need to tailor a specific power spectrum or a PCF to represent point correlations which requires expert knowledge from the end users. Instead, we can simply pick correlations from our correlation palette to design the point correlations and use that to synthesize point patterns. We start with a given density map in Fig. 21(a). Figure 21(b) and (c) uses traditional PCF representation. Figure 21(d) and (e) shows our green and blue noise stippling which require painting the *AB*-channel with the specific color (latent coordinate) green and blue noise stippling which require painting the *AB*-channel with the specific color (latent coordinate). We create spatially varying point pattern Fig. 21(f) by simply assigning green color to the face and blue color to the background Previous methods [Zhou et al. 2012; Öztireli and Gross 2012] are not able to create point patterns with spatially-varying correlations like ours.

**Neural network-aid point pattern design**

Ablation study. Here we study the impact of our network (trained on faces) components. Firstly, we demonstrate that our network is important in terms of density estimation. As shown in Fig. 23 (first row), one way to estimate density from points is to perform traditional kernel density estimation. However, this can lead to blurry results given the number of points is finite. Our network trained on face images, on the other hand, can reconstruct higher quality density map. Note that no existing method can perform correlation estimation from points, both density and correlation estimation branches are important in our network. Secondly, we study the impact of using $\mathcal{L}_{adv}$ during training. The second row shows that training with $\mathcal{L}_{adv}$ can produce sharper density and correlation map that is used to synthesize points closer to the input compared with training without $\mathcal{L}_{adv}$.

Input points from existing methods. In Fig. 24, the input points are synthesized using existing methods. We use Zhou et al. [2012] to generate the input points with CCVT profile (in the first row) and Salaün et al. [2022] to generate blue noise face stippling (in the second row). Our network reconstructs the underlying correlation and density which can be edited to obtain new synthesized points with spatially-varying correlation. Note that our network can only faithfully reconstruct the correlations which are covered by the latent space.

## User study

Usefulness experiment. In this experiment, we first explain the concept of density (*L*-channel) and correlation (*AB*-channel) to the users so that they are able to pick correlation from our correlation palette and density as otherwise they are able to pick color by switching between the *L*- and *AB*-channels, a built-in function of Photoshop that can natively work in LAB mode.

## REFERENCES

Rameen Abdal, Yipeng Qin, and Peter Wonka. 2019. Image2stylegan: How to embed images into the stylegan latent space?. In ICCV. 4432-4441.

Abdalla GM Ahmed, Jianwei Guo, Dong-Ming Yan, Jean-Yves Franceschia, Xiaopeng Zhang, and Oliver Deussen. 2017. A simple push-pull algorithm for blue-noise sampling. IEEE Trans. Vis and Comp. Graph. 23, 12 (2017).

Abdalla GM Ahmed, Hui Huang, and Oliver Deussen. 2015. AA patterns for point sets with controlled spectral properties. ACM Trans. Graph. 34, 6 (2015).

Abdalla GM Ahmed, Helene Perrier, David Coeurjolly, Victor Ostromoukhov, Jianwei Guo, Dong-Ming Yan, Hui Huang, and Oliver Deussen. 2016. Low-discrepancy blue noise sampling. ACM Trans. Graph. 35, 6 (2016).

Xiaobo An, Xin Tong, Jonathan D. Denning, and Fabio Pellacini. 2011. AppWarp: Retargeting Measured Materials by Appearance-Space Warping. ACM Trans. Graph. 30, 6 (2011), 1-10. Michael Balzer, Thomas Schlömer, and Oliver Deussen. 2009. Capacity-constrained point distributions: a variant of Lloyd's method. ACM Trans. Graph. 28, 3 (2009).

Marcelo Bertalmio, Guillermo Sapiro, Vincent Caselles, and Coloma Ballester. 2000. Image Inpainting. In Proc. SIGGRAPH. 417-424.

György Biittner and Barbara Kosztra. 2017. CLC2018 Technical Guidelines. Technical Report. European Environment Agency.

Jiating Chen, Xiaoyin Ge, Li-Yi Wei, Bin Wang, Yusu Wang, Huamin Wang, Yun Fei, Kang-Lai Qian, Jun-Hai Yong, and Wenping Wang. 2013. Bilateral blue noise sampling. ACM Trans. Graph. 32, 6 (2013), 1-11.

Jiawen Chen, Sylvain Paris, and Fredo Durand. 2007. Real-time edge-aware image processing with the bilateral grid. ACM Trans. Graph. 26, 3 (2007), 103-113.

Yunjey Choi, Youngjung Uh, Jaejun Yoo, and Jung-Woo Ha. 2020. Stargan v2: Diverse image synthesis for multiple domains. In Proceedings of the IEEE/CVF conference on computer vision and pattern recognition. 8188-8197.

Robert L Cook. 1986. Stochastic sampling in computer graphics. ACM Trans. Graph. 5, 1 (1986).

Fernando De Goes, Katherine Breeden, Victor Ostromoukhov, and Mathieu Desbrun. 2012. Blue noise through optimal transport. ACM Trans. Graph. 31, 6 (2012).

Oliver Deussen, Stefan Hiller, Cornelius Van Overveld, and Thomas Strothotte. 2000. Floating points: A method for computing stipple drawings. In Comp. Graph. Forum, Vol. 19. 41-50. Oliver Deussen and Tobias Isenberg. 2013. Halftoning and Stippling. In Image and Video-Based Artistic Stylisation, Paul Rosin and John Collomosse (Eds.). Springer London, 45-61.

Francesco D1 Renzo, Claudio Calabrese, and Fabio Pellacini. 2014. Applm: Linear Spaces for Image-Based Appearance Editing. ACM Trans. Graph. 33, 6 (2014).

Mark A. Z. Dippe and Erling Henry Wold. 1985. Antialiasing through Stochastic Sampling. In SIGGRAPH. 69-78.

John Duncan and Glyn W Humphreys. 1989. Visual search and stimulus similarity. Psychological review 96, 3 (1989), 433.

Fredo Durand. 2011. A frequency analysis of Monte-Carlo and other numerical integration schemes. Technical Report TR-2011-052. MIT CSAIL.

Alexei A. Efros and William T. Freeman. 2001. Image Quilting for Texture Synthesis and Transfer. In SIGGRAPH. 341-346.

Arnaud Emilien, Ulysse Vimont, Marie-Paule Cani, Pierre Poulin, and Bedrich Benes. 2015. Worldbrush: Interactive example-based synthesis of procedural virtual worlds. ACM Trans. Graph. 34, 4 (2015), 1-11.

Mark D Fairchild. 2013. Color appearance models. John Wiley & Sons.

Raanan Fattal. 2011. Blue-noise point sampling using kernel density model. ACM Trans. Graph. 30, 4 (2011).

Leon A. Gatys, Alexander S. Ecker, and Matthias Bethge. 2016. Image Style Transfer Using Convolutional Neural Networks. In CVPR. 2414-2423.

Paul Guerrero, Gilbert Bernstein, Wilmot Li, and Niloy J. Mitra. 2016. PATEX: Exploring Pattern Variations. ACM Trans. Graph. 35, 4 (2016).

Daniel Heck, Thomas Schlömer, and Oliver Deussen. 2013. Blue noise sampling with controlled aliasing. ACM Trans.

Graph. (Proc. SIGGRAPH) 32, 3 (2013).

Philipp Henzler, Niloy J Mitra, , and Tobias Ritschel. 2019. Learning a Neural 3D Texture Space from 2D Exemplars. In CVPR.

Pedro Hermosilla, Tobias Ritschel, Pere-Pau Vazquez, Alvar Vinacua, and Timo Ropinski. 2018. Monte Carlo Convolution for Learning on Non-uniformly Sampled Point Clouds. ACM Trans. Graph (Proc. SIGGRAPH Asia) 37,5 (2018).

Aaron Hertzmann, Charles E Jacobs, Nuria Oliver, Brian CNOurless, and David H Salesin. 2001. Image analogies. In SIGGRAPH. 327-340.

Chen-Yuan Hsu, Li-Yi Wei, Lihua You, and Jian Jun Zhang. 2020. Autocomplete element fields. In Proc. CHI. 1-13.

Xingchang Huang, Pooran Memari, Hans-Peter Seidel, and Gurprit Singh. 2022. PointPattern Synthesis using Gabor and Random Filters. In Comp. Graph. Forum, Vol. 41. 169-179.

Phillip Isola, Jun-Yan Zhu, Tinghui Zhou, and Alexei A Efros. 2017. Image-to-Image Translation with Conditional Adversarial Networks. CVPR (2017).

Adrian Jarabo, Belen Masia, Adrien Bousseau, Fabio Pellacini, and Diego Gutierrez. 2014. How Do People Edit Light Fields? ACM Trans. Graph. 33, 4 (2014).

Henrik Wann Jensen. 2001. Realistic image synthesis using photon mapping. AK Peters/crc Press.

Bhavya Kailkhura, Jayaraman J Thiagarajan, Peer-Timo Bremer, and Pramod K Varshney. 2016. Stair blue noise sampling. ACM Trans. Graph. 35, 6 (2016).

Konrad Kapp, James Gain, Eric Guerin, Eric Galin, and Adrien Peytavie. 2020. Datadriven authoring of large-scale ecosystems. ACM Trans. Graph. 39, 6 (2020), 1-14.

Sung Ye Kim, Ross Maciejewski, Tobias Isenberg, William M. Andrews, Wei Chen, Mario Costa Sousa, and David S. Ebert. 2009. Stippling by Example. In Proc. NPAR. 41-50.

Diederik P Kingma and Jimmy Ba. 2014. Adam: A method for stochastic optimization. arXiυ preprint arXiυ:1412.6980 (2014).

Hans Knutsson and C-F Westin. 1993. Normalized and differential convolution. In CVPR. 515-523.

Johannes Kopf, Daniel Cohen-Or, Oliver Deussen, and Dani Lischinski. 2006. Recursive Wang tiles for real-time blue noise. ACM Trans. Graph. (Proc. SIGGRAPH) 25, 3 (2006).

Ares Lagae and Philip Dutre. 2008. A Comparison of Methods for Generating Poisson Disk Distributions. Comp. Graph. Forum 27, 1 (2008).

Daniel L. Lau, Gonzalo R. Arce, and Neal C. Gallagher. 1999. Digital halftoning by means of green-noise masks. J OSA 16, 7 (1999), 1575-1586.

Cheng-Han Lee, Ziwei Liu, Lingyun Wu, and Ping Luo. 2020. MaskGAN: Towards Diverse and Interactive Facial Image Manipulation. In CVPR.

Thomas Leimkiihler, Gurprit Singh, Karol Myszkowski, Hans-Peter Seidel, and Tobias Ritschel. 2019. Deep Point Correlation Design. ACM Trans. Graph. 38, 6 (2019).

Norbert Lindow, Daniel Baum, and Hans-Christian Hege. 2012. Perceptually linear parameter variations. In Comp. Graph. Forum, Vol. 31. 535-544.

Yang Liu, Wenping Wang, Bruno Levy, Feng Sun, Dong-Ming Yan, Lin Lu, and Chenglei Yang. 2009. On centroidal Voronoi tessellation - energy smoothness and fast computation. ACM Trans. Graph. 28, 4 (2009).

Stuart Lloyd. 1982. Least squares quantization in PCM. IEEE Trans Inform. Theory 28, 2 (1982).

Chongyang Ma, Li-Yi Wei, and Xin Tong. 2011. Discrete Element Textures. ACM Trans. Graph. 30, 4 (2011).

Domingo Martin, German Arroyo, Alejandro Rodriguez, and Tobias Isenberg. 2017. A survey of digital stippling. Computers & Graphics 67 (2017), 24-44.

Chuong H Nguyen, Tobias Ritschel, and Hans-Peter Seidel. 2015. Data-driven color manifolds. ACM Trans. Graph. 34, 2 (2015), 1-9.

Victor Ostromoukhov, Charles Donohue, and Pierre-Marc Jodoin. 2004. Fast hierarchical importance sampling with blue noise properties. ACM Trans. Graph. 23, 3 (2004).

A Cengiz Öztireli and Markus Gross. 2012. Analysis and synthesis of point distributions based on pair correlation. ACM Trans. Graph. 31, 6 (2012).

Adam Paszke, Sam Gross, Soumith Chintala, Gregory Chanan, Edward Yang, Zachary DeVito, Zeming Lin, Alban Desmaison, Luca Antiga, and Adam Lerer. 2017. Automatic differentiation in pytorch. (2017).

Fabio Pellacini. 2010. envyLight: An Interface for Editing Natural Illumination. ACM Trans. Graph. (SIGGRAPH) (2010).

Fabio Pellacini, James A Ferwerda, and Donald P Greenberg. 2000. Toward a psychophysi-cally-based light reflection model for image synthesis. In SIGGRAPH. 55-64.

Fabio Pellacini and Jason Lawrence. 2007. AppWand: Editing Measured Materials Using Appearance-Driven Optimization. ACM Trans. Graph. 26, 3 (2007), 54-64.

Georg Petschnigg, Richard Szeliski, Maneesh Agrawala, Michael Cohen, Hugues Hoppe, and Kentaro Toyama.

2004. Digital photography with flash and no-flash image pairs. ACM Trans. Graph. 23, 3 (2004), 664-672.

Michal Piovarci, David I.W. Levin, Danny Kaufman, and Piotr Didyk. 2018. PerceptionAware Modeling and Fabrication of Digital Drawing Tools. ACM Trans. Graph. (SIGGRAPH) 37, 4 (2018).

Louis CW Pols, LJ Th Van der Kamp, and Reinier Plomp. 1969. Perceptual and physical space of vowel sounds. J ASA 46, 2B (1969), 458-467.

Javier Portilla and Eero P Simoncelli. 2000. A parametric texture model based on joint statistics of complex wavelet coefficients. Int. J Computer Vision 40 (2000), 49-70.

Charles R Qi, Hao Su, Kaichun Mo, and Leonidas J Guibas. 2017. Pointnet: Deep learning on point sets for 3D classification and segmentation. CVPR (2017).

Hongxing Qin, Yi Chen, Jinlong He, and Baoquan Chen. 2017. Wasserstein Blue Noise Sampling. ACM Trans. Graph. 36, 5 (2017).

Pradyumna Reddy, Paul Guerrero, Matt Fisher, Wilmot Li, and Niloy J. Mitra. 2020. Discovering Pattern Structure Using Differentiable Compositing. ACM Trans. Graph. 39, 6 (2020).

Bernhard Reinert, Tobias Ritschel, and Hans-Peter Seidel. 2013. Interactive By-Example Design of Artistic Packing Layouts. ACM Trans. Graph. 32, 6 (2013).

Paul Rosin and John Collomosse. 2012. Image and Video-Based Artistic Stylisation. Springer Publishing Company, Incorporated.

Tamar Rott Shaham, Tali Dekel, and Tomer Michaeli. 2019. SinGAN: Learning a Generative Model from a Single Natural Image. In ICCV.

Riccardo Roveri, A. Cengiz Öztireli, and Markus Gross. 2017. General Point Sampling with Adaptive Density and Correlations. Comp. Graph. Forum 36, 2 (2017), 107-117.

Corentin Salaiin, Iliyan Georgiev, Hans-Peter Seidel, and Gurprit Singh. 2022. Scalable Multi-Class Sampling via Filtered Sliced Optimal Transport. ACM Trans. Graph. (SIGGRAPH) 41, 6 (2022).

Christian Schmaltz, Pascal Gwosdek, Andres Bruhn, and Joachim Weickert. 2010. Electrostatic Halftoning. Comp. Graph. Forum (2010).

Christoph Schulz, Kin Chung Kwan, Michael Becher, Daniel Baumgartner, Guido Reina, Oliver Deussen, and Daniel Weiskopf. 2021. Multi-Class Inverted Stippling. ACM Trans. Graph. 40, 6 (2021).

Adrian Secord. 2002. Weighted Voronoi stippling. In Proc. NPAR.

Omry Sendik and Daniel Cohen-Or. 2017. Deep Correlations for Texture Synthesis. ACM Trans. Graph. 36, 5 (2017).

Eero P Simoncelli and Bruno A Olshausen. 2001. Natural image statistics and neural representation. Ann. Review Neuroscience 24, 1 (2001).

Karen Simonyan and Andrew Zisserman. 2015. Very Deep Convolutional Networks for Large-Scale Image Recognition. In Proc. ICLR, Yoshua Bengio and Yann LeCun (Eds.).

Gurprit Singh, Cengiz Oztireli, Abdalla G.M. Ahmed, David Coeurjolly, Kartic Subr, Oliver Deussen, Victor Ostromoukhov, Ravi Ramamoorthi, and Wojciech Jarosz. 2019. Analysis of Sample Correlations for Monte Carlo Rendering. Comp. Graph Form. (Proc. EGSR) 38, 2 (2019)

Šárka Sochorova and Ondřej Jamriška. 2021. Practical pigment mixing for digital painting. ACM Trans. Graph. 40, 6 (2021), 1-11.

Marc Spicker, Franz Hahn, Thomas Lindemeier, Dietmar Saupe, and Oliver Deussen. 2017. Quantifying Visual Abstraction Quality for Stipple Drawings. In Proc. NPAR.

Steve Strassmann. 1986. Hairy brushes. SIGGRAPH 20, 4 (1986), 225-232.

Tiancheng Sun, Jonathan T. Barron, Yun-Ta Tsai, Zexiang Xu, Xueming Yu, Graham Fyffe, Christoph Rhemann, Jay Busch, Paul Debevec, and Ravi Ramamoorthi. 2019. Single Image Portrait Relighting. ACM Trans. Graph. 38, 4 (2019).

Peihan Tu, Dani Lischinski, and Hui Huang. 2019. Point Pattern Synthesis via Irregular Convolution. Comp. Graph. Forum 38 (2019).

Robert Ulichney. 1987. Digital Halftoning. MIT Press.

Florent Wachtel, Adrien Pilleboue, David Coeurjolly, Katherine Breeden, Gurprit Singh, Gaël Cathelin, Fernando De Goes, Mathieu Desbrun, and Victor Ostromoukhov. 2014. Fast tile-based adaptive sampling with user-specified Fourier spectra. ACM Trans. Graph. 33, 4 (2014).

Li-Yi Wei. 2010. Multi-class blue noise sampling. ACM Trans. Graph. 29, 4 (2010).

Li-Yi Wei and Rui Wang. 2011. Differential domain analysis for non-uniform sampling. ACM Trans. Graph. 30, 4 (2011).

Josh Wills, Sameer Agarwal, David Kriegman, and Serge Belongie. 2009. Toward a perceptual space for gloss. ACM Trans. Graph. 28, 4 (2009), 1-15.

Yifan Xu, Tianqi Fan, Yi Yuan, and Gurprit Singh. 2020. Ladybird: Quasi-Monte Carlo Sampling for Deep Implicit Field Based 3D Reconstruction with Symmetry. ECCV (2020), 248-263.

Dong-Ming Yan, Jian-Wei Guo, Bin Wang, Xiao-Peng Zhang, and Peter Wonka. 2015. A survey of blue-noise sampling and its applications. Journal of Comp. Sci. and Tech. 30, 3 (2015).

John I Yellott. 1983. Spectral consequences of photoreceptor sampling in the rhesus retina. Science 221, 4608 (1983).

Fisher Yu, Ari Seff, Yinda Zhang, Shuran Song, Thomas Funkhouser, and Jianxiong Xiao. 2015. Lsun: Construction of a large-scale image dataset using deep learning with humans in the loop. arXiv preprint arXiv:1506.03365 (2015).

Cheng Zhang, Cengiz Öztireli, Stephan Mandt, and Giampiero Salvi. 2019. Active Mini-Batch Sampling Using Repulsive Point Processes. AAAI.

Yahan Zhou, Haibin Huang, Li-Yi Wei, and Rui Wang. 2012. Point sampling with general noise spectrum. ACM Trans. Graph. 31, 4 (2012).

Yang Zhou, Zhen Zhu, Xiang Bai, Dani Lischinski, Daniel Cohen-Or, and Hui Huang. 2018. Non-Stationary Texture Synthesis by Adversarial Expansion. ACM Trans. Graph. 37, 4 (2018).

György Biittner and Barbara Kosztra. 2017. CLC2018 Technical Guidelines. Technical Report. European Environment Agency.

Yunjey Choi, Youngjung Uh, Jaejun Yoo, and Jung-Woo Ha. 2020. Stargan v2: Diverse image synthesis for multiple domains. In Proceedings of the IEEE/CVF conference on computer vision and pattern recognition. 8188-8197.

Phillip Isola, Jun-Yan Zhu, Tinghui Zhou, and Alexei A Efros. 2017. Image-to-Image Translation with Conditional Adversarial Networks. CVPR (2017).

Diederik P Kingma and Jimmy Ba. 2014. Adam: A method for stochastic optimization. arXiv preprint arXiv:1412.6980 (2014).

Cheng-Han Lee, Ziwei Liu, Lingyun Wu, and Ping Luo. 2020. MaskGAN: Towards Diverse and Interactive Facial Image Manipulation. In CVPR.

Thomas Leimkiihler, Gurprit Singh, Karol Myszkowski, Hans-Peter Seidel, and Tobias Ritschel. 2019. Deep Point Correlation Design. ACM Trans. Graph. 38, 6 (2019).

A Cengiz Öztireli and Markus Gross. 2012. Analysis and synthesis of point distributions based on pair correlation. ACM Trans. Graph. 31, 6 (2012).

Corentin Salaiin, Iliyan Georgiev, Hans-Peter Seidel, and Gurprit Singh. 2022. Scalable Multi-Class Sampling via Filtered Sliced Optimal Transport. ACM Trans. Graph. (SIGGRAPH) 41, 6 (2022).

Karen Simonyan and Andrew Zisserman. 2014. Very deep convolutional networks for large-scale image recognition. arXiv preprint arXiv:1409-1556 (2014).

Fisher Yu, Ari Seff, Yinda Zhang, Shuran Song, Thomas Funkhouser, and Jianxiong Xiao. 2015. Lsun: Construction of a large-scale image dataset using deep learning with humans in the loop. arXiv preprint arXiv:1506.03365 (2015).

Yahan Zhou, Haibin Huang, Li-Yi Wei, and Rui Wang. 2012. Point sampling with general noise spectrum. ACM Trans. Graph. 31, 4 (2012).

## Claims

1. A Computer-implemented method for determining a mapping between point patterns and corresponding coordinates in a 2D latent space, the method comprising:

   - for each of a set of representative point patterns, determining a set of feature vectors, wherein features of the feature vectors represent perceptual properties,
   - determining a dissimilarity matrix between the representative point patterns based on the feature vectors, and
   - performing dimensionality reduction using the dissimilarity matrix to determine the mapping from the representative point patterns to the 2D latent space.

2. The method of claim 1, further comprising an initial step of determining the representative point patterns based on representative radial power spectrum or pair correlation function profiles.

3. The method of claim 1 or 2, wherein the set of feature vectors for each representative point pattern is determined using a pre-trained neural network, in particular using a pre-trained VGG network, wherein preferably the feature vectors with respect to each representative point pattern are used to compute corresponding Gram matrices.

4. The method of one of the previous claims, wherein performing dimensionality reduction comprises performing multidimensional scaling.

5. The method of one of the previous claims, further comprising storing, for each 2D latent coordinate,

   - a pair correlation function, PCF, of the point pattern corresponding to the 2D latent coordinate, and/or

- a learning rate to obtain the respective point pattern.

6. The method of one of the previous claims, further comprising interpolating and/or extrapolating the stored PCFs to obtain PCFs at all spatial coordinates in the 2D latent space, wherein preferably the interpolation and/or extrapolating comprises using Inverse Distance Weighting.

7. A computer-implemented method for training a network to predict for a given point pattern a 3-channel image, wherein a first channel of the 3-channel image corresponds to a density of the given point pattern and a second and a third channel of the 3-channel image correspond to a correlation of the given point pattern, the method comprising:

- obtaining a dataset of 1-channel training images as density,
- creating, for each of the 1-channel training images, a set of training point patterns, wherein each of the set of training point patterns has a randomly determined 2-channel spatially varying correlation, and
- using the sets of training point patterns to train the network to predict correlation and density.

8. The method of claim 7, wherein creating a set of training point patterns comprises determining each of the training point patterns by:

- randomly creating locations of 2D Gaussian functions, each corresponding to a 2D-coordinate in a 2D latent space,
- blending the 2D Gaussian functions to create a color map, and
- creating a training point pattern with correlation corresponding to the color map and density corresponding to the 1-channel image.

9. The method of claim 7, wherein the training images are human face images, and the creating a set of training point patterns comprises determining each of the training point patterns by:

- obtaining a segmentation map of the face image,
- assigning random correlations to each of the segments of the segmentation of the face image, and
- creating a training point pattern with correlations corresponding to the random correlations and density corresponding to the 1-channel image.

10. The method of one of claims 7 to 9, wherein the method further comprises training a set of networks wherein each network is trained for a different image class and/or wherein the network comprises a pix2pix-network.

11. A computer-implemented method for determining a 3-channel image from a given point pattern, the method comprising using a neural network which has been trained using the method of one of claims 7 to 10.

12. A computer-implemented method for determining, for a given 2D coordinate in the latent space, a corresponding point pattern, the method comprising looking up a prestored PCF that corresponds to the 2D coordinate, wherein preferably the prestored PCF has been computed using the method of claim 5.

13. A computer-implemented method for determining a point pattern based on a 3-channel image, the method comprising:

- for each pixel of the 3-channel image, obtaining a target PCF that reflects density as indicated by a first channel of the 3-channel image and correlation as indicated by a second and a third channel of the 3-channel image,
- randomly initializing a point pattern,
- iteratively:

- determining random locations in the point pattern,
- at each of the random locations:

- calculating an actual PCF of nearest k points of the point pattern to the random location, and
- moving the nearest k points of the point pattern so that the actual PCF matches the target PCF at that random location.

14. The method of claim 13, wherein the computing the actual PCF comprises:

- based on the second and third channel, determining the correlation of each point, and
- if the correlation of a point of k nearest points is different from the correlation of a current location, reducing a contribution of the point with the different correlation to the actual PCF, wherein preferably the contribution is reduced using a weighting based on a difference of the correlations, such that a more different correlation leads to a lower influence on the computed actual PCF,

and/or wherein the method further comprises using a gradient of a loss function to update locations of the nearest k points.

15. A method for editing a point pattern, wherein the method comprises:

- determining, using a method of claim 11, a color image based on the point pattern,
- using a method for editing color images to obtain an edited color image representing the edited point pattern, and
- determining, preferably using a method of one of claims 13 and 14, an edited point pattern based on the edited color image.

**FIG. 1**

**FIG. 2**

**FIG. 3**

(a) Radial power spectrum profiles    (b) Realized point sets    (c) VGG feature maps    (d) feature vectors    (e) Dissimilarity matrix   (f) 2D latent space

**FIG. 4**

**FIG. 5**

**FIG. 6**

**FIG. 7**

(a)  (b)  (c)  (d)

**FIG. 8**

FIG. 9

FIG. 10

**FIG. 11**

**FIG. 12**

Roveri et al. [2017]     Ours

**FIG. 13**

Ours Gram     Ours PCF     Oztireli & Gross [2012]

**FIG. 14**

Latent space as points (see Fig. 5)    Chroma (*AB*-channel)

**FIG. 15**

Input    Target    User 1    User 2    User 3

**FIG. 16**

**FIG. 17**

**FIG. 18**

**FIG. 19**

**FIG. 20**

(a) Input image

(b) Zhou et al. [2012]

(c) Öztireli and Gross [2012]

(d) Ours (green)

(e) Ours (blue)

(f) Ours (blue & green)

**FIG. 21**

Input points

Colors

Re-synthesized points

**FIG. 22**

| Input points | with KDE | Synthesized points (KDE) | Our network | Synthesized points |

| Input points | without $\mathcal{L}_{adv}$ | Synthesized points | with $\mathcal{L}_{adv}$ | Synthesized points |

**FIG. 23**

| Input points | Network output | Our editing | Synthesized points |

**FIG. 24**

Europäisches
Patentamt

European
Patent Office

Office européen
des brevets

# EUROPEAN SEARCH REPORT

Application Number

EP 23 18 7111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABUKMEIL MOHANAD MOHANAD ABUKMEIL@UNIMI IT ET AL: "A Survey of Unsupervised Generative Models for Exploratory Data Analysis and Representation Learning", ACM COMPUTING SURVEYS, ACM, NEW YORK, NY, US, US, vol. 54, no. 5, 9 July 2021 (2021-07-09), pages 1-40, XP058666828, ISSN: 0360-0300, DOI: 10.1145/3450963 | 1,3-5 | INV. G06V10/75 G06V10/77 G06V10/82 G06V40/16 |
| Y | * page 99:1, line 1 – page 99:33, paragraph 2; tables 1-2 * | 2,6 | |
| Y | ÖZTIRELI A. CENGIZ ET AL: "Analysis and synthesis of point distributions based on pair correlation", ACM TRANSACTIONS ON GRAPHICS, vol. 31, no. 6, 1 November 2012 (2012-11-01), pages 1-10, XP093098643, US ISSN: 0730-0301, DOI: 10.1145/2366145.2366189 | 2,6 | |
| | | | **TECHNICAL FIELDS SEARCHED (IPC)** |
| A | * page 170:1, column 1, paragraph 1 – page 170:9, column 1, paragraph 2; figures 1-11 * | 1,3-5 | G06V |

-/--

The present search report has been drawn up for all claims

| Place of search | Date of completion of the search | Examiner |
|---|---|---|
| The Hague | 26 January 2024 | Thibault, Guillaume |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt
European
Patent Office
Office européen
des brevets

# EUROPEAN SEARCH REPORT

Application Number

EP 23 18 7111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Blania Alex ET AL: "Deep learning of spatial densities in inhomogeneous correlated quantum systems", arXiv.org, 16 November 2022 (2022-11-16), XP093123525, Ithaca DOI: 10.48550/arxiv.2211.09050 Retrieved from the Internet: URL:https://arxiv.org/pdf/2211.09050.pdf [retrieved on 2024-01-24] * page 1, column 1, line 1 – page 7, column 2, last line; figures 1-3 * | 7-11,15 | |
| X | RICCARDO ROVERI ET AL: "General Point Sampling with Adaptive Density and Correlations", COMPUTER GRAPHICS FORUM : JOURNAL OF THE EUROPEAN ASSOCIATION FOR COMPUTER GRAPHICS, WILEY-BLACKWELL, OXFORD, vol. 36, no. 2, 23 May 2017 (2017-05-23), pages 107-117, XP071545457, ISSN: 0167-7055, DOI: 10.1111/CGF.13111 * page 108, column 1, line 1 – page 117, column 1, line 3; figures 1-12 * | 13,14 | |

TECHNICAL FIELDS SEARCHED (IPC)

The present search report has been drawn up for all claims

| Place of search | Date of completion of the search | Examiner |
|---|---|---|
| The Hague | 26 January 2024 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

**Application Number**

**EP 23 18 7111**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-11, 13-15

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 23 18 7111

---

The Search Division considers that the present European patent application does not comply with the requirements of unity of invention and relates to several inventions or groups of inventions, namely:

1. claims: 1-6

   related to features solving a problem of how to perform a mapping between point patterns and corresponding coordinates in a 2D latent space in an improved manner
   ---

2. claims: 7-11, 15

   related to features solving a problem of how to efficiently train a network to predict correlation and density of a given point pattern
   ---

3. claim: 12

   related to features solving a problem of how to iteratively determine, for a given coordinate in the latent space, a corresponding point pattern using prestored data
   ---

4. claims: 13, 14

   related to features solving a problem of how to efficiently determine a point pattern based on a 3-channel image
   ---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMEEN ABDAL ; YIPENG QIN ; PETER WONKA**. Image2stylegan: How to embed images into the stylegan latent space?. *ICCV*, 2019, 4432-4441
- **ABDALLA GM AHMED ; JIANWEI GUO ; DONG-MING YAN ; JEAN-YVES FRANCESCHIA ; XIAO-PENG ZHANG ; OLIVER DEUSSEN**. A simple push-pull algorithm for blue-noise sampling.. *IEEE Trans. Vis and Comp. Graph.*, 2017, vol. 23, 12
- **ABDALLA GM AHMED ; HUI HUANG ; OLIVER DEUSSEN**. AA patterns for point sets with controlled spectral properties. *ACM Trans. Graph.*, 2015, vol. 34, 6
- **ABDALLA GM AHMED ; HELENE PERRIER ; DAVID COEURJOLLY ; VICTOR OSTROMOU-KHOV ; JIANWEI GUO ; DONG-MING YAN ; HUI HUANG ; OLIVER DEUSSEN**. Low-discrepancy blue noise sampling. *ACM Trans. Graph.*, 2016, vol. 35 (6)
- **XIAOBO AN ; XIN TONG ; JONATHAN D. DEN-NING ; FABIO PELLACINI**. AppWarp: Retargeting Measured Materials by Appearance-Space Warping. *ACM Trans. Graph.*, 2011, vol. 30 (6), 1-10
- **MICHAEL BALZER ; THOMAS SCHLÖMER ; OLI-VER DEUSSEN.** Capacity-constrained point distributions: a variant of Lloyd's method. *ACM Trans. Graph.*, 2009, vol. 28, 3
- **MARCELO BERTALMIO ; GUILLERMO SAPIRO ; VINCENT CASELLES ; COLOMA BALLESTER**. Image Inpainting. *Proc. SIGGRAPH.*, 2000, 417-424
- CLC2018 Technical Guidelines. **GYÖRGY BIITT-NER ; BARBARA KOSZTRA**. Technical Report. European Environment Agency, 2017
- **JIATING CHEN ; XIAOYIN GE ; LI-YI WEI ; BIN WANG ; YUSU WANG ; HUAMIN WANG ; YUN FEI ; KANG-LAI QIAN ; JUN-HAI YONG ; WENPING WANG**. Bilateral blue noise sampling. *ACM Trans. Graph.*, 2013, vol. 32 (6), 1-11
- **JIAWEN CHEN ; SYLVAIN PARIS ; FREDO DUR-AND**. Real-time edge-aware image processing with the bilateral grid. *ACM Trans. Graph.*, 2007, vol. 26 (3), 103-113
- **YUNJEY CHOI ; YOUNGJUNG UH ; JAEJUN YOO ; JUNG-WOO HA**. Stargan v2: Diverse image synthesis for multiple domains. *Proceedings of the IEEE/CVF conference on computer vision and pattern recognition*, 2020, 8188-8197

- **ROBERT L COOK**. Stochastic sampling in computer graphics. *ACM Trans. Graph.*, 1986, vol. 5, 1
- **FERNANDO DE GOES ; KATHERINE BREEDEN ; VICTOR OSTROMOUKHOV ; MATHIEU DES-BRUN**. Blue noise through optimal transport. *ACM Trans. Graph.*, 2012, vol. 31 (6)
- **OLIVER DEUSSEN ; STEFAN HILLER ; CORNE-LIUS VAN OVERVELD ; THOMAS STROTHOTTE**. Floating points: A method for computing stipple drawings. *Comp. Graph. Forum*, 2000, vol. 19, 41-50
- Halftoning and Stippling. **OLIVER DEUSSEN ; TOBIAS ISENBERG**. Image and Video-Based Artistic Stylisation. Springer, 2013, 45-61
- **FRANCESCO D1 RENZO ; CLAUDIO CALABR-ESE ; FABIO PELLACINI**. Applm: Linear Spaces for Image-Based Appearance Editing. *ACM Trans. Graph.*, 2014, vol. 33, 6
- **MARK A. Z. DIPPE ; ERLING HENRY WOLD**. Antialiasing through Stochastic Sampling. *SIG-GRAPH*, 1985, 69-78
- **JOHN DUNCAN ; GLYN W HUMPHREYS**. Visual search and stimulus similarity. *Psychological review*, 1989, vol. 96 (3), 433
- A frequency analysis of Monte-Carlo and other numerical integration schemes. **FREDO DURAND**. Technical Report TR-2011-052. MIT CSAIL, 2011
- **ALEXEI A. EFROS ; WILLIAM T. FREEMAN.** Image Quilting for Texture Synthesis and Transfer. *SIG-GRAPH*, 2001, 341-346
- **ARNAUD EMILIEN, ULYSSE VIMONT, MARIE-PAULE CANI, PIERRE POULIN, BEDRICH BENES**. Worldbrush: Interactive example-based synthesis of procedural virtual worlds. *ACM Trans. Graph.*, 2015, vol. 34 (4), 1-11
- **MARK D FAIRCHILD**. Color appearance models.. John Wiley & Sons, 2013
- **RAANAN FATTAL.** Blue-noise point sampling using kernel density model.. *ACM Trans. Graph.*, 2011, vol. 30, 4
- **LEON A. GATYS ; ALEXANDER S. ECKER ; MATTHIAS BETHGE.** Image Style Transfer Using Convolutional Neural Networks. *CVPR*, 2016, 2414-2423
- **PAUL GUERRERO ; GILBERT BERNSTEIN ; WIL-MOT LI ; NILOY J. MITRA**. PATEX: Exploring Pattern Variations. *ACM Trans. Graph.*, 2016, vol. 35, 4

- **DANIEL HECK** ; **THOMAS SCHLÖMER** ; **OLIVER DEUSSEN**. Blue noise sampling with controlled aliasing. *ACM Trans. Graph. (Proc. SIGGRAPH)*, 2013, vol. 32, 3
- **PHILIPP HENZLER** ; **NILOY J MITRA** ; **TOBIAS RITSCHEL**. Learning a Neural 3D Texture Space from 2D Exemplars. *CVPR*, 2019
- **PEDRO HERMOSILLA** ; **TOBIAS RITSCHEL** ; **PERE-PAU VAZQUEZ** ; **ALVAR VINACUA** ; **TIMO ROPINSKI**. Monte Carlo Convolution for Learning on Non-uniformly Sampled Point Clouds. *ACM Trans. Graph (Proc. SIGGRAPH Asia)*, 2018, vol. 37, 5
- **AARON HERTZMANN** ; **CHARLES E JACOBS** ; **NURIA OLIVER** ; **BRIAN CNOURLESS** ; **DAVID H SALESIN**. Image analogies. *SIGGRAPH*, 2001, 327-340
- **CHEN-YUAN HSU** ; **LI-YI WEI** ; **LIHUA YOU** ; **JIAN JUN ZHANG**. Autocomplete element fields. *Proc. CHI.*, 2020, 1-13
- **XINGCHANG HUANG** ; **POORAN MEMARI** ; **HANS-PETER SEIDEL** ; **GURPRIT SINGH**. PointPattern Synthesis using Gabor and Random Filters. *Comp. Graph. Forum*, 2022, vol. 41, 169-179
- **PHILLIP ISOLA** ; **JUN-YAN ZHU** ; **TINGHUI ZHOU** ; **ALEXEI A EFROS**. Image-to-Image Translation with Conditional Adversarial Networks. *CVPR*, 2017
- **ADRIAN JARABO** ; **BELEN MASIA** ; **ADRIEN BOUSSEAU** ; **FABIO PELLACINI** ; **DIEGO GUTIERREZ**. How Do People Edit Light Fields?. *ACM Trans. Graph.*, 2014, vol. 33, 4
- **HENRIK WANN JENSEN**. Realistic image synthesis using photon mapping.. AK Peters/crc Press, 2001
- **BHAVYA KAILKHURA** ; **JAYARAMAN J THIAGARAJAN** ; **PEER-TIMO BREMER** ; **PRAMOD K VARSHNEY**. Stair blue noise sampling. *ACM Trans. Graph.*, 2016, vol. 35, 6
- **KONRAD KAPP** ; **JAMES GAIN** ; **ERIC GUERIN** ; **ERIC GALIN** ; **ADRIEN PEYTAVIE**. Datadriven authoring of large-scale ecosystems. *ACM Trans. Graph.*, 2020, vol. 39 (6), 1-14
- **SUNG YE KIM** ; **ROSS MACIEJEWSKI** ; **TOBIAS ISENBERG** ; **WILLIAM M. ANDREWS** ; **WEI CHEN** ; **MARIO COSTA SOUSA** ; **DAVID S. EBERT**. Stippling by Example. *Proc. NPAR.*, 2009, 41-50
- **DIEDERIK P KINGMA** ; **JIMMY BA**. Adam: A method for stochastic optimization. *arXiv preprint arXiv:1412.6980*, 2014
- **HANS KNUTSSON** ; **C-F WESTIN**. Normalized and differential convolution. *CVPR*, 1993, 515-523
- **JOHANNES KOPF** ; **DANIEL COHEN-OR** ; **OLIVER DEUSSEN** ; **DANI LISCHINSKI**. Recursive Wang tiles for real-time blue noise. *ACM Trans. Graph. (Proc. SIGGRAPH)*, 2006, vol. 25, 3
- **ARES LAGAE** ; **PHILIP DUTRE**. A Comparison of Methods for Generating Poisson Disk Distributions. *Comp. Graph. Forum*, 2008, vol. 27, 1
- **DANIEL L. LAU** ; **GONZALO R. ARCE** ; **NEAL C. GALLAGHER**. Digital halftoning by means of green-noise masks. *J OSA*, 1999, vol. 16 (7), 1575-1586
- **CHENG-HAN LEE** ; **ZIWEI LIU** ; **LINGYUN WU** ; **PING LUO**. MaskGAN: Towards Diverse and Interactive Facial Image Manipulation. *CVPR*, 2020
- **THOMAS LEIMKIIHLER** ; **GURPRIT SINGH** ; **KAROL MYSZKOWSKI** ; **HANS-PETER SEIDEL** ; **TOBIAS RITSCHEL**. Deep Point Correlation Design. *ACM Trans. Graph.*, 2019, vol. 38, 6
- **NORBERT LINDOW** ; **DANIEL BAUM** ; **HANS-CHRISTIAN HEGE**. Perceptually linear parameter variations. *Comp. Graph. Forum*, 2012, vol. 31, 535-544
- **YANG LIU** ; **WENPING WANG** ; **BRUNO LEVY** ; **FENG SUN** ; **DONG-MING YAN** ; **LIN LU** ; **CHEN-GLEI YANG**. On centroidal Voronoi tessellation - energy smoothness and fast computation. *ACM Trans. Graph.*, 2009, vol. 28, 4
- **STUART LLOYD**. Least squares quantization in PCM.. *IEEE Trans Inform. Theory*, 1982, vol. 28, 2
- **CHONGYANG MA** ; **LI-YI WEI** ; **XIN TONG**. Discrete Element Textures. *ACM Trans. Graph.*, 2011, vol. 30, 4
- **DOMINGO MARTIN** ; **GERMAN ARROYO** ; **ALEJANDRO RODRIGUEZ** ; **TOBIAS ISENBERG**. A survey of digital stippling. *Computers & Graphics*, 2017, vol. 67, 24-44
- **CHUONG H NGUYEN** ; **TOBIAS RITSCHEL** ; **HANS-PETER SEIDEL**. Data-driven color manifolds. *ACM Trans. Graph.*, 2015, vol. 34 (2), 1-9
- **VICTOR OSTROMOUKHOV** ; **CHARLES DONOHUE** ; **PIERRE-MARC JODOIN**. Fast hierarchical importance sampling with blue noise properties. *ACM Trans. Graph.*, 2004, vol. 23, 3
- **A CENGIZ ÖZTIRELI** ; **MARKUS GROSS**. Analysis and synthesis of point distributions based on pair correlation. *ACM Trans. Graph.*, 2012, vol. 31, 6
- **ADAM PASZKE** ; **SAM GROSS** ; **SOUMITH CHINTALA** ; **GREGORY CHANAN** ; **EDWARD YANG** ; **ZACHARY DEVITO** ; **ZEMING LIN** ; **ALBAN DESMAISON** ; **LUCA ANTIGA** ; **ADAM LERER**. *Automatic differentiation in pytorch.*
- **FABIO PELLACINI**. envyLight: An Interface for Editing Natural Illumination. *ACM Trans. Graph. (SIGGRAPH)*, 2010
- **FABIO PELLACINI** ; **JAMES A FERWERDA** ; **DONALD P GREENBERG**. Toward a psychophysically-based light reflection model for image synthesis. *SIGGRAPH*, 2000, 55-64

- **FABIO PELLACINI** ; **JASON LAWRENCE.** App-Wand: Editing Measured Materials Using Appearance-Driven Optimization. *ACM Trans. Graph.*, 2007, vol. 26 (3), 54-64
- **GEORG PETSCHNIGG** ; **RICHARD SZELISKI** ; **MANEESH AGRAWALA** ; **MICHAEL COHEN** ; **HUGUES HOPPE** ; **KENTARO TOYAMA**. Digital photography with flash and no-flash image pairs. *ACM Trans. Graph.*, 2004, vol. 23 (3), 664-672
- **MICHAL PIOVARCI** ; **DAVID I.W. LEVIN** ; **DANNY KAUFMAN** ; **PIOTR DIDYK**. PerceptionAware Modeling and Fabrication of Digital Drawing Tools. *ACM Trans. Graph. (SIGGRAPH)*, 2018, vol. 37, 4
- **LOUIS CW POLS** ; **LJ TH VAN DER KAMP** ; **REINIER PLOMP**. Perceptual and physical space of vowel sounds. *J ASA*, 1969, vol. 46 (2B), 458-467
- **JAVIER PORTILLA** ; **EERO P SIMONCELLI**. A parametric texture model based on joint statistics of complex wavelet coefficients. *Int. J Computer Vision*, 2000, vol. 40, 49-70
- **CHARLES R QI** ; **HAO SU** ; **KAICHUN MO** ; **LEONIDAS J GUIBAS**. Pointnet: Deep learning on point sets for 3D classification and segmentation. *CVPR*, 2017
- **HONGXING QIN** ; **YI CHEN** ; **JINLONG HE** ; **BAOQUAN CHEN**. Wasserstein Blue Noise Sampling. *ACM Trans. Graph.*, 2017, vol. 36, 5
- **PRADYUMNA REDDY** ; **PAUL GUERRERO** ; **MATT FISHER** ; **WILMOT LI** ; **NILOY J. MITRA**. Discovering Pattern Structure Using Differentiable Compositing. *ACM Trans. Graph.*, 2020, vol. 39, 6
- **BERNHARD REINERT** ; **TOBIAS RITSCHEL** ; **HANS-PETER SEIDEL**. Interactive By-Example Design of Artistic Packing Layouts. *ACM Trans. Graph.*, 2013, vol. 32, 6
- **PAUL ROSIN** ; **JOHN COLLOMOSSE**. Image and Video-Based Artistic Stylisation. Springer Publishing Company, Incorporated, 2012
- **TAMAR ROTT SHAHAM** ; **TALI DEKEL** ; **TOMER MICHAELI**. SinGAN: Learning a Generative Model from a Single Natural Image. *ICCV*, 2019
- **RICCARDO ROVERI** ; **A. CENGIZ ÖZTIRELI** ; **MARKUS GROSS**. General Point Sampling with Adaptive Density and Correlations. *Comp. Graph. Forum*, 2017, vol. 36 (2), 107-117
- **CORENTIN SALAIIN** ; **ILIYAN GEORGIEV** ; **HANS-PETER SEIDEL** ; **GURPRIT SINGH**. Scalable Multi-Class Sampling via Filtered Sliced Optimal Transport. *ACM Trans. Graph. (SIGGRAPH)*, 2022, vol. 41, 6
- **CHRISTIAN SCHMALTZ** ; **PASCAL GWOSDEK** ; **ANDRES BRUHN** ; **JOACHIM WEICKERT**. Electrostatic Halftoning. *Comp. Graph. Forum*, 2010
- **CHRISTOPH SCHULZ** ; **KIN CHUNG KWAN** ; **MICHAEL BECHER** ; **DANIEL BAUMGARTNER** ; **GUIDO REINA** ; **OLIVER DEUSSEN** ; **DANIEL WEISKOPF.** Multi-Class Inverted Stippling. *ACM Trans. Graph.*, 2021, vol. 40, 6
- **ADRIAN SECORD**. Weighted Voronoi stippling.. *Proc. NPAR*, 2002
- **OMRY SENDIK** ; **DANIEL COHEN-OR**. Deep Correlations for Texture Synthesis. *ACM Trans. Graph.*, 2017, vol. 36, 5
- **EERO P SIMONCELLI** ; **BRUNO A OLSHAUSEN**. Natural image statistics and neural representation. *Ann. Review Neuroscience*, 2001, vol. 24 (1)
- Very Deep Convolutional Networks for Large-Scale Image Recognition. **KAREN SIMONYAN** ; **ANDREW ZISSERMAN**. Proc. ICLR. 2015
- **GURPRIT SINGH** ; **CENGIZ OZTIRELI** ; **ABDALLA G.M. AHMED** ; **DAVID COEURJOLLY** ; **KARTIC SUBR** ; **OLIVER DEUSSEN** ; **VICTOR OSTROMOUKHOV** ; **RAVI RAMAMOORTHI** ; **WOJCIECH JAROSZ**. Analysis of Sample Correlations for Monte Carlo Rendering. *Comp. Graph Form. (Proc. EGSR)*, 2019, vol. 38, 2
- **ŜÁRKA SOCHOROVA** ; **ONDŘEJ JAMRIŠKA**. Practical pigment mixing for digital painting. *ACM Trans. Graph.*, 2021, vol. 40 (6), 1-11
- **MARC SPICKER** ; **FRANZ HAHN** ; **THOMAS LINDEMEIER** ; **DIETMAR SAUPE** ; **OLIVER DEUSSEN**. Quantifying Visual Abstraction Quality for Stipple Drawings. *Proc. NPAR.*, 2017
- **STEVE STRASSMANN**. Hairy brushes. *SIGGRAPH*, 1986, vol. 20 (4), 225-232
- **TIANCHENG SUN** ; **JONATHAN T. BARRON** ; **YUN-TA TSAI** ; **ZEXIANG XU** ; **XUEMING YU** ; **GRAHAM FYFFE** ; **CHRISTOPH RHEMANN** ; **JAY BUSCH** ; **PAUL DEBEVEC** ; **RAVI RAMAMOORTHI**. Single Image Portrait Relighting. *ACM Trans. Graph.*, 2019, vol. 38, 4
- **PEIHAN TU** ; **DANI LISCHINSKI** ; **HUI HUANG**. Point Pattern Synthesis via Irregular Convolution. *Comp. Graph. Forum*, 2019, vol. 38
- **ROBERT ULICHNEY.** Digital Halftoning.. MIT Press, 1987
- **FLORENT WACHTEL** ; **ADRIEN PILLEBOUE** ; **DAVID COEURJOLLY** ; **KATHERINE BREEDEN** ; **GURPRIT SINGH** ; **GAËL CATHELIN** ; **FERNANDO DE GOES** ; **MATHIEU DESBRUN** ; **VICTOR OSTROMOUKHOV**. Fast tile-based adaptive sampling with user-specified Fourier spectra. *ACM Trans. Graph.*, 2014, vol. 33, 4
- **LI-YI WEI**. Multi-class blue noise sampling. *ACM Trans. Graph.*, 2010, vol. 29, 4
- **LI-YI WEI** ; **RUI WANG**. Differential domain analysis for non-uniform sampling. *ACM Trans. Graph.*, 2011, vol. 30, 4

- **JOSH WILLS** ; **SAMEER AGARWAL** ; **DAVID KRIEGMAN** ; **SERGE BELONGIE**. Toward a perceptual space for gloss. *ACM Trans. Graph.*, 2009, vol. 28 (4), 1-15
- **YIFAN XU** ; **TIANQI FAN** ; **YI YUAN** ; **GURPRIT SINGH**. Ladybird: Quasi-Monte Carlo Sampling for Deep Implicit Field Based 3D Reconstruction with Symmetry. *ECCV*, 2020, 248-263
- **DONG-MING YAN** ; **JIAN-WEI GUO** ; **BIN WANG** ; **XIAO-PENG ZHANG** ; **PETER WONKA**. A survey of blue-noise sampling and its applications. *Journal of Comp. Sci. and Tech.*, 2015, vol. 30, 3
- **JOHN I YELLOTT**. Spectral consequences of photoreceptor sampling in the rhesus retina. *Science*, 1983, vol. 221, 4608
- **FISHER YU** ; **ARI SEFF** ; **YINDA ZHANG** ; **SHURAN SONG** ; **THOMAS FUNKHOUSER** ; **JIANXIONG XIAO**. Lsun: Construction of a large-scale image dataset using deep learning with humans in the loop. *arXiv preprint arXiv:1506.03365*, 2015
- **CHENG ZHANG** ; **CENGIZ ÖZTIRELI** ; **STEPHAN MANDT** ; **GIAMPIERO SALVI.** Active Mini-Batch Sampling Using Repulsive Point Processes. *AAAI*, 2019
- **YAHAN ZHOU** ; **HAIBIN HUANG** ; **LI-YI WEI** ; **RUI WANG**. Point sampling with general noise spectrum. *ACM Trans. Graph.*, 2012, vol. 31, 4
- **YANG ZHOU** ; **ZHEN ZHU** ; **XIANG BAI** ; **DANI LISCHINSKI** ; **DANIEL COHEN-OR** ; **HUI HUANG**. Non-Stationary Texture Synthesis by Adversarial Expansion. *ACM Trans. Graph.*, 2018, vol. 37, 4
- **DIEDERIK P KINGMA** ; **JIMMY BA**. Adam: A method for stochastic optimization. *arXiv preprint arXiv:1412.6980*, 2014
- **KAREN SIMONYAN** ; **ANDREW ZISSERMAN**. Very deep convolutional networks for large-scale image recognition. *arXiv preprint arXiv:1409-1556*, 2014